(19) Europäisches Patentamt / European Patent Office / Office européen des brevets

(11) **EP 3 454 517 B1**

(12) **EUROPEAN PATENT SPECIFICATION**

(45) Date of publication and mention
of the grant of the patent:
**24.02.2021 Bulletin 2021/08**

(51) Int Cl.:
*H04L 25/497* [(2006.01)]     *H04L 27/34* [(2006.01)]
*H04L 25/03* [(2006.01)]

(21) Application number: **16903573.0**

(22) Date of filing: **03.06.2016**

(86) International application number:
**PCT/CN2016/084816**

(87) International publication number:
**WO 2017/206188 (07.12.2017 Gazette 2017/49)**

(54) **FTN-BASED COMMUNICATION METHOD AND RELEVANT APPARATUS**

FTN-BASIERTES KOMMUNIKATIONSVERFAHREN UND ENTSPRECHENDE VORRICHTUNG

PROCÉDÉ DE COMMUNICATION BASÉ SUR UN FTN ET APPAREIL ASSOCIÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.03.2019 Bulletin 2019/11**

(73) Proprietor: **Huawei Technologies Co., Ltd.
Longgang District
Shenzhen, Guangdong 518129 (CN)**

(72) Inventors:
• **ZHANG, Changming**
  **Shenzhen**
  **Guangdong 518129 (CN)**
• **CAI, Meng**
  **Shenzhen**
  **Guangdong 518129 (CN)**

(74) Representative: **Maiwald Patent- und
Rechtsanwaltsgesellschaft mbH
Elisenhof
Elisenstraße 3
80335 München (DE)**

(56) References cited:
EP-A1- 3 430 727     WO-A1-2015/006380
CN-A- 105 099 968     CN-A- 105 493 460

• KIM Y J D ET AL: "Iterative receiver for
faster-than-Nyquist broadcasting",
ELECTRONICS LET, IEE STEVENAGE, GB, vol.
48, no. 24, 22 November 2012 (2012-11-22), pages
1561-1562, XP006042359, ISSN: 0013-5194, DOI:
10.1049/EL.2012.3346
• KIM, Y.J.D. et al.: "Binary Faster than Nyquist
Optical Transmission via Non-uniform Power
Allocation", 2013 13th CANADIAN WORKSHOP
ON INFORMATION THEORY, 18 June 2013
(2013-06-18), pages 180-184, XP032495673,

## Description

## TECHNICAL FIELD

The present invention relates to the field of wireless communications technologies, and in particular, to an FTN-based communication method and a related apparatus.

## BACKGROUND

In Faster than Nyquist (Faster than Nyquist, FTN), a symbol period is compressed in time domain without changing a waveform of a single symbol, to be specific, a signal bandwidth is maintained, to achieve a higher symbol rate. From another perspective, the FTN is equivalent to compressing a signal bandwidth in frequency domain without changing a symbol period, to save a frequency resource. In conclusion, by using the FTN technology, spectrum efficiency is improved, thereby helping alleviate an increasingly prominent spectrum resource crisis.

The Article by KIM Y J D ET AL: titled "Iterative receiver for faster-than-Nyquist broadcasting", published on ELECTRONICS LET, IEE STEVENAGE, GB, vol. 48, no. 24, 22 November 2012 (2012-11-22), pages 1561-1562, describes systems and methods for iterative receiver for faster-than-Nyquist broadcasting.

A most critical part in an FTN communications system is FTN demodulation of a receiving apparatus. Because a signal bandwidth is compressed in the FTN, a problem of inter-symbol interference (Inter-Symbol Interference, ISI for short) exists in a signal received by the receiving apparatus. An objective of FTN demodulation is to enable the receiving apparatus to remove ISI, so as to obtain, from a to-be-processed symbol, data sent by a sending apparatus. A demodulation result may be hard decision information or soft decision information. Generally, a soft decision result needs to be obtained when encoding and decoding need to be performed.

In the prior art, a Bahl, Cocke, Jelinek, and Raviv (Bahl, Cocke, Jelinek, and Raviv, BCJR for short) algorithm may be used to perform FTN demodulation. However, as a base M of a number system of modulation increases, a quantity of states and a quantity of branch transfers of each level in the BCJR algorithm increase exponentially. Considering that FTN demodulation is performed separately for in-phase and quadrature (In-phase and Quadrature, IQ for short) channels, a quantity of values of a level of each channel is $\sqrt{M}$, a quantity of states is $M^{(L-1)/2}$, and a quantity of branch transfers of each level is $M^{L/2}$, where L represents a considered ISI length. Using L = 10 as an example, Table 1 shows quantities of states and quantities of branch transfers in different modulation schemes (I and Q channels are considered, and a quantity of states and a quantity of branch transfers in the table are twice the foregoing result).

**Table 1: Quantities of states and quantities of branch transfers in different modulation schemes**

| Modulation scheme | Quantity of states | Quantity of branch transfers |
| --- | --- | --- |
| QPSK | 1024 | 2048 |
| 16QAM | 524288 | $2.10 \times 10^6$ |
| 64QAM | $2.68 \times 10^8$ | $2.15 \times 10^9$ |
| 256QAM | $1.37 \times 10^{11}$ | $2.20 \times 10^{12}$ |
| 1024QAM | $7.04 \times 10^{13}$ | $2.25 \times 10^{15}$ |
| 4096QAM | $3.60 \times 10^{16}$ | $2.31 \times 10^{18}$ |
| 16384QAM | $1.84 \times 10^{19}$ | $2.36 \times 10^{21}$ |

The quantity of states and the quantity of branch transfers directly determine FTN demodulation complexity. In existing research, it is considered that the BCJR algorithm is applied only to simple modulation schemes such as binary phase shift keying (Binary Phase Shift Keying, BPSK for short) (FTN demodulation is performed for a single channel) and quadrature phase shift keying (Quadrature Phase Shift Keying, QPSK for short) (FTN demodulation is performed for I and Q channels), and the BCJR algorithm is hardly applied to a high-order modulation mode.

However, in an actual communications system, in a low-order modulation mode, it is quite difficult to achieve relatively high spectrum efficiency by using the FTN technology, and a high-order modulation mode needs to be used to further improve spectrum efficiency. However, it is quite difficult to perform demodulation for the high-order modulation mode by using the FTN demodulation algorithm in the prior art.

Based on the foregoing elaboration, an FTN-based communication solution is urgently needed, so as to implement, with relatively low complexity, FTN demodulation for an equivalent high-order modulation mode, and further achieve relatively high spectrum efficiency.

## SUMMARY

Embodiments of the present invention provide an FTN-based communication method and a related apparatus, applied to a communications system of an equivalent high-order modulation mode, to achieve relatively high spectrum efficiency.

An embodiment of the present invention provides an FTN-based communication method according to claim 1.

By using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

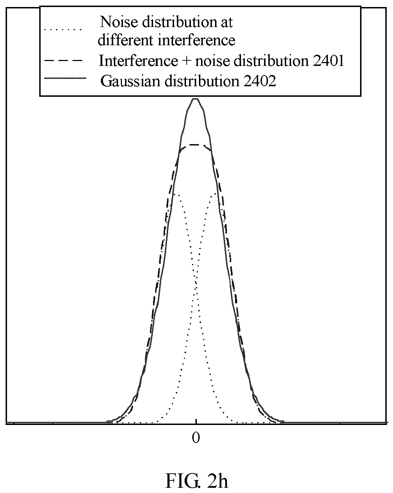

Optionally, the generating, by the receiving apparatus, an $i^{th}$-layer state transition lattice diagram for a $j^{th}$ layer to an $i^{th}$ layer includes: generating, by the receiving apparatus, a state transition lattice diagram for an $i^{th}$-layer ISI tap and a significant ISI tap of each of the $j^{th}$ layer to the $(i-1)^{th}$ layer, where the significant ISI tap of each of the $j^{th}$ layer to the $(i-1)^{th}$ layer is an ISI tap that is of each of the $j^{th}$ layer to the $(i-1)^{th}$ layer and whose energy is greater than an energy threshold corresponding to the $i^{th}$ layer. Because the significant ISI tap of each of the $j^{th}$ layer to the $(i-1)^{th}$ layer is considered in the state transition lattice diagram, if other interference and noise are considered as a Gaussian distribution, accuracy is relatively high, and no relatively big error exists. Some noise distributions in other interference cases are shown in FIG. 2h, and are not discussed herein.

Optionally, the performing, by the receiving apparatus, FTN demodulation on the $i^{th}$-layer to-be-processed symbol based on the $i^{th}$-layer state transition lattice diagram, to obtain the $i^{th}$-layer demodulated symbol includes: generating, by the receiving apparatus for each branch transfer and based on the state transition lattice diagram, an $i^{th}$-layer symbol expected to be output, where the $i^{th}$-layer symbol expected to be output includes a sum of symbols that are obtained by multiplying $j^{th}$-layer to $i^{th}$-layer symbols by power factors corresponding to the layers; and calculating, by the receiving apparatus, an $i^{th}$-layer log-likelihood ratio LLR based on the $i^{th}$-layer symbol expected to be output. In this way, impact of the $j^{th}$ layer to the $(i-1)^{th}$ layer is considered when the $i^{th}$-layer symbol expected to be output is generated, so that more accurate FTN demodulation can be performed.

Optionally, a generation rule used when the receiving apparatus generates, for each branch transfer and based on the state transition lattice diagram, the $i^{th}$-layer symbol expected to be output satisfies the following formula requirement: $\sqrt{P_i}\sum_{l=0}^{L-1}f_l a_{n-l}^i + \sqrt{P_{i-1}}\sum_{l=0}^{L_1-1}f_l a_{n-l}^{i-1} + \cdots + \sqrt{P_{i-m}}\sum_{l=0}^{L_m-1}f_l a_{n-l}^{i-m} + \cdots + \sqrt{P_j}\sum_{l=0}^{L_{i-j}-1}f_l a_{n-l}^j$, where

$P_i$ is a power corresponding to the $i^{th}$-layer symbol, $P_{i-1}$ is a power corresponding to an $(i-1)^{th}$-layer symbol, $P_{i-m}$ is a power corresponding to an $(i-m)^{th}$-layer symbol, $P_j$ is a power corresponding to the $j^{th}$-layer symbol, $\sqrt{P_i}$ is a power factor corresponding to the $i^{th}$-layer symbol, $\sqrt{P_{i-1}}$ a power factor corresponding to the $(i-1)^{th}$-layer symbol, $\sqrt{P_{i-m}}$ is a power factor corresponding to the $(i-m)^{th}$-layer symbol, and $\sqrt{P_j}$ is a power factor corresponding to the $j^{th}$-layer symbol; L is a preset length of the $i^{th}$-layer ISI tap, $L_1$ is a preset length of the $(i-1)^{th}$-layer significant ISI tap, $L_m$ is a preset length of an $(i-m)^{th}$-layer significant ISI tap, and $L_{i-j}$ is a preset length of the $j^{th}$-layer significant ISI tap;

$\sqrt{P_i}\sum_{l=0}^{L-1}f_l a_{n-l}^i$ is an $i^{th}$-layer symbol component, $\sqrt{P_{i-1}}\sum_{l=0}^{L_1-1}f_l a_{n-l}^{i-1}$ is an $(i-1)^{th}$-layer symbol component when the significant ISI tap is considered, $\sqrt{P_{i-m}}\sum_{l=0}^{L_m-1}f_l a_{n-l}^{i-m}$ is an $(i-m)^{th}$-layer symbol component when the significant ISI tap is considered, and $\sqrt{P_j}\sum_{l=0}^{L_{i-j}-1}f_l a_{n-l}^j$ is a $j^{th}$-layer symbol component when the significant ISI tap is considered;

m is an integer, and any integer in [1, i-j] is taken as m; $f_l$ is an ISI tap coefficient; $a_{n-l}^i$ is $i^{th}$-layer data corresponding to the state transition lattice diagram, $a_{n-l}^{i-1}$ is $(i-1)^{th}$-layer data corresponding to the state *i-m* transition lattice diagram,

$a_{n-l}^{i-m}$ is (i-m)th-layer data corresponding to the state transition lattice diagram, and $a_{n-l}^{j}$ is jth-layer data corresponding to the state transition lattice diagram; and n is a data label. Because the significant ISI tap of each of the jth layer to the (i-1)th layer is considered in the state transition lattice diagram, if other interference and noise are considered as a Gaussian distribution, accuracy is relatively high, and no relatively big error exists. Some noise distributions in other interference cases are shown in FIG. 2h, and are not discussed herein.

Optionally, the performing, by the receiving apparatus, FTN demodulation on the ith-layer to-be-processed symbol, to obtain an ith-layer demodulated symbol, and making decision based on the ith-layer demodulated symbol, to obtain an ith-layer decision result includes: performing, by the receiving apparatus, FTN demodulation, de-interleaving, and decoding on the ith-layer to-be-processed symbol repetitively by using an iterative structure, to obtain an ith-layer decoding result after a plurality of iterations; and making, by the receiving apparatus, decision based on the ith-layer decoding result, to obtain the ith-layer decision result. In this way, the obtained ith-layer decoding result is more accurate, and further, decision can be made more accurately based on the ith-layer decoding result, to obtain the more accurate ith-layer decision result. Then, a more accurate ith-layer FTN reconstruction symbol can be reconstructed based on the ith-layer decision result, to more accurately and thoroughly cancel interference imposed on an (i-1)th-layer to-be-processed symbol by the ith-layer FTN reconstruction symbol to the Kth-layer FTN reconstruction symbol, to be specific, to more accurately cancel extremely high interference imposed on a current layer by a layer having a higher power.

Optionally, the performing, by the receiving apparatus, FTN demodulation, de-interleaving, and decoding on the ith-layer to-be-processed symbol repetitively, to obtain an ith-layer decoding result after a plurality of iterations includes: for each of the plurality of iterations, performing the following steps: performing, by the receiving apparatus, FTN demodulation, de-interleaving, and decoding on the ith-layer to-be-processed symbol, to obtain an ith-layer decoding result of the current iteration; and using the ith-layer decoding result of the current iteration as prior information of FTN demodulation in a next iteration process, to perform FTN demodulation, de-interleaving, and decoding of the next iteration. Therefore, a demodulation result is more accurate. Decision is made for a decoding result of the last iteration of each layer, to obtain a final sink.

An example useful for understanding the present invention provides an FTN-based communication method, including:

separately performing, by a sending apparatus, encoding, interleaving, and modulation on a signal of all K layers, to obtain a symbol of each of the K layers, where K is a positive integer greater than 1; and
filtering, by the sending apparatus, all symbols of the K layers through FTN shaping filtering based on a power allocated to each of the K layers, and concurrently sending the symbols, where powers corresponding to a first layer to a Kth layer increase successively.

By using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

Optionally, the power allocated to each of the K layers satisfies the following conditions: a system BER is less than a BER threshold, and a sum of a first-layer power to a Kth-layer power is not greater than a total power threshold. This not only ensures that the system BER satisfies a requirement, but also ensures that the sum of the powers of all layers does not exceed a requirement of the total power threshold, so that performance of an entire system is in an optimal status.

Optionally, the power allocated to each of the K layers is obtained by using the following method: allocating the power to each of the K layers in a sequence from the first layer to the Kth layer. In this way, the power can be allocated to each layer more efficiently and accurately.

Optionally, the power allocated to each of the K layers is obtained by using the following method:

allocating the first-layer power to the first layer, where the first-layer power is a lowest power satisfying that the system BER is less than the BER threshold; and
when i is greater than 1, performing the following steps:

step A. setting an ith-layer power to an (i-1)th-layer power, and performing step B;
step B. increasing the ith-layer power at a preset step once, to obtain an updated ith-layer power, and performing step C;

step C. performing step D when it is determined that a sum of the first-layer power to the $(i-1)^{th}$-layer power and the updated $i^{th}$-layer power is not greater than the total power threshold;

step D. performing step E when it is determined that the system BER is less than the BER threshold, or performing step B when it is determined that the system BER is not less than the BER threshold;

step E. determining the updated $i^{th}$-layer power as the $i^{th}$-layer power, and performing step F; and

step F. when it is determined that i is less than Ko, increasing i by 1, and performing step A.

Optionally, the method further includes: setting a value of K to i-1 when it is determined, in step C, that the sum of the first-layer power to the $(i-1)^{th}$-layer power and the updated $i^{th}$-layer power is greater than the total power threshold. Optionally, the method further includes: setting the value of K to Ko when it is determined, in step F, that i is not less than Ko. By using the foregoing optional method, on one hand, the value of K specified in this embodiment of the present invention can satisfy a requirement of current data transmission as far as possible; and on the other hand, the value of K can satisfy performance of the system itself.

An embodiment of the present invention provides a receiving apparatus according to claim 4.

Optionally, when generating the $i^{th}$-layer state transition lattice diagram for the $j^{th}$ layer to the $i^{th}$ layer, the processing unit is configured to generate a state transition lattice diagram for an $i^{th}$-layer ISI tap and a significant ISI tap of each of the $j^{th}$ layer to the $(i-1)^{th}$ layer, where the significant ISI tap of each of the $j^{th}$ layer to the $(i-1)^{th}$ layer is an ISI tap that is of each of the $j^{th}$ layer to the $(i-1)^{th}$ layer and whose energy is greater than an energy threshold corresponding to the $i^{th}$ layer.

Optionally, when performing FTN demodulation on the $i^{th}$-layer to-be-processed symbol based on the $i^{th}$-layer state transition lattice diagram, to obtain the $i^{th}$-layer demodulated symbol, the processing unit is configured to: generate, for each branch transfer and based on the state transition lattice diagram, an $i^{th}$-layer symbol expected to be output, where the $i^{th}$-layer symbol expected to be output includes a sum of symbols that are obtained by multiplying $j^{th}$-layer to $i^{th}$-layer symbols by power factors corresponding to the layers; and calculate an $i^{th}$-layer log-likelihood ratio LLR based on the $i^{th}$-layer symbol expected to be output.

Optionally, a generation rule used when the processing unit generates, for each branch transfer and based on the state transition lattice diagram, the $i^{th}$-layer symbol expected to be output satisfies the formula requirement in the method, and details are not described herein again.

Optionally, when performing FTN demodulation on the $i^{th}$-layer to-be-processed symbol, to obtain the $i^{th}$-layer demodulated symbol, and making decision based on the $i^{th}$-layer demodulated symbol, to obtain the $i^{th}$-layer decision result, the processing unit is configured to: perform FTN demodulation, de-interleaving, and decoding on the $i^{th}$-layer to-be-processed symbol repetitively by using an iterative structure, to obtain an $i^{th}$-layer decoding result after a plurality of iterations; and make decision based on the $i^{th}$-layer decoding result, to obtain the $i^{th}$-layer decision result.

Optionally, when performing FTN demodulation, de-interleaving, and decoding on the $i^{th}$-layer to-be-processed symbol repetitively, to obtain the $i^{th}$-layer decoding result after the plurality of iterations, the processing unit is configured to: for each of the plurality of iterations, perform the following steps:

performing FTN demodulation, de-interleaving, and decoding on the $i^{th}$-layer to-be-processed symbol, to obtain an $i^{th}$-layer decoding result of the current iteration; and using the $i^{th}$-layer decoding result of the current iteration as prior information of FTN demodulation in a next iteration process, to perform FTN demodulation, de-interleaving, and decoding of the next iteration.

By using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

An example useful for understanding the present invention provides a sending apparatus, including:

a processing unit, configured to: separately perform encoding, interleaving, and modulation on a signal of all K layers, to obtain a symbol of each of the K layers, where K is a positive integer greater than 1; and filter all symbols of the K layers through FTN shaping filtering based on a power allocated to each of the K layers; and

a sending unit, configured to concurrently send all filtered symbols of the K layers, where powers corresponding to a first layer to a $K^{th}$ layer increase successively.

Optionally, for a condition satisfied by the power allocated to each of the K layers and a method for allocating the power to each of the K layers, refer to the descriptions in the foregoing method embodiment part, and details are not described herein again.

An embodiment of the present invention provides a receiving apparatus, including:

a receiver, configured to receive a signal that is concurrently sent by a sending apparatus by using K layers;
a memory, configured to store a program and an instruction; and
a processor, configured to perform the following steps by invoking the program and the instruction that are stored in the memory:

converting the signal into to-be-processed symbols, where K is a positive integer greater than 1, and powers corresponding to a first layer to a $K^{th}$ layer increase successively; and
for an $i^{th}$ layer in the K layers, where i is greater than or equal to 1 and less than or equal to K, performing the following steps:
separating an $i^{th}$-layer to-be-processed symbol from the to-be-processed symbols; and when it is determined that i is equal to K, using the to-be-processed symbols as the $i^{th}$-layer to-be-processed symbols; or when it is determined that i is not equal to K, obtaining an $(i+1)^{th}$-layer FTN reconstruction symbol to a $K^{th}$-layer FTN reconstruction symbol that are reconstructed based on an $(i+1)^{th}$-layer decision result to a $K^{th}$-layer decision result, and removing the obtained $(i+1)^{th}$-layer FTN reconstruction symbol to $K^{th}$-layer FTN reconstruction symbol from the to-be-processed symbols, to obtain the $i^{th}$-layer to-be-processed symbol; performing FTN demodulation on the $i^{th}$-layer to-be-processed symbol, to obtain an $i^{th}$-layer demodulated symbol; and making decision based on the $i^{th}$-layer demodulated symbol, to obtain an $i^{th}$-layer decision result.

Optionally, the processor is configured to: when i is equal to 1, generate a first-layer state transition lattice diagram for the first layer; and generate, for each branch transfer and based on the first-layer state transition lattice diagram, a first-layer symbol expected to be output, where a first-layer log-likelihood ratio LLR is calculated based on the first-layer symbol expected to be output.

Optionally, the processor is configured to: when i is not equal to 1, generate an $i^{th}$-layer state transition lattice diagram for a $j^{th}$ layer to an $i^{th}$ layer; and perform FTN demodulation on the $i^{th}$-layer to-be-processed symbol based on the $i^{th}$-layer state transition lattice diagram, to obtain the $i^{th}$-layer demodulated symbol, where each of the $j^{th}$ layer to an $(i-1)^{th}$ layer is a preset layer causing interference greater than an interference threshold to the $i^{th}$ layer, and j is greater than or equal to 1 and less than or equal to i-1.

Optionally, when generating the $i^{th}$-layer state transition lattice diagram for the $j^{th}$ layer to the $i^{th}$ layer, the processor is configured to generate a state transition lattice diagram for an $i^{th}$-layer ISI tap and a significant ISI tap of each of the $j^{th}$ layer to the $(i-1)^{th}$ layer, where the significant ISI tap of each of the $j^{th}$ layer to the $(i-1)^{th}$ layer is an ISI tap that is of each of the $j^{th}$ layer to the $(i-1)^{th}$ layer and whose energy is greater than an energy threshold corresponding to the $i^{th}$ layer.

Optionally, when performing FTN demodulation on the $i^{th}$-layer to-be-processed symbol based on the $i^{th}$-layer state transition lattice diagram, to obtain the $i^{th}$-layer demodulated symbol, the processor is configured to: generate, for each branch transfer and based on the state transition lattice diagram, an $i^{th}$-layer symbol expected to be output, where the $i^{th}$-layer symbol expected to be output includes a sum of symbols that are obtained by multiplying $j^{th}$-layer to $i^{th}$-layer symbols by power factors corresponding to the layers; and calculate an $i^{th}$-layer log-likelihood ratio LLR based on the $i^{th}$-layer symbol expected to be output.

Optionally, for a generation rule used when the processor generates, for each branch transfer and based on the state transition lattice diagram, the $i^{th}$-layer symbol expected to be output, refer to the formula requirement in the method, and details are not described herein again.

Optionally, when performing FTN demodulation on the $i^{th}$-layer to-be-processed symbol, to obtain the $i^{th}$-layer demodulated symbol, and making decision based on the $i^{th}$-layer demodulated symbol, to obtain the $i^{th}$-layer decision result, the processor is configured to: perform FTN demodulation, de-interleaving, and decoding on the $i^{th}$-layer to-be-processed symbol repetitively by using an iterative structure, to obtain an $i^{th}$-layer decoding result after a plurality of iterations; and make decision based on the $i^{th}$-layer decoding result, to obtain the $i^{th}$-layer decision result.

Optionally, when performing FTN demodulation, de-interleaving, and decoding on the $i^{th}$-layer to-be-processed symbol repetitively, to obtain the $i^{th}$-layer decoding result after the plurality of iterations, the processor is configured to: for each of the plurality of iterations, perform the following steps:
performing FTN demodulation, de-interleaving, and decoding on the $i^{th}$-layer to-be-processed symbol, to obtain an $i^{th}$-layer decoding result of the current iteration; and using the $i^{th}$-layer decoding result of the current iteration as prior information of FTN demodulation in a next iteration process, to perform FTN demodulation, de-interleaving, and decoding of the next iteration.

It can be learned from the foregoing content that in this embodiment of the present invention, by using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

An example useful for understanding the present invention provides a sending apparatus, including:

a memory, configured to store a program and an instruction; and

a processor, configured to perform the following steps by invoking the program and the instruction that are stored in the memory:

separately performing encoding, interleaving, and modulation on a signal of all K layers, to obtain a symbol of each of the K layers, where K is a positive integer greater than 1; and filter all symbols of the K layers through FTN shaping filtering based on a power allocated to each of the K layers; and

a transmitter, configured to concurrently send all filtered symbols of the K layers, where powers corresponding to a first layer to a $K^{th}$ layer increase successively.

Optionally, for a condition satisfied by the power allocated to each of the K layers and a method for allocating the power to each of the K layers, refer to the descriptions in the foregoing method embodiment part, and details are not described herein again.

In the embodiments of the present invention, the receiving apparatus receives the signal that is concurrently sent by the sending apparatus by using the K layers, and converts the signal into the to-be-processed symbols, where K is a positive integer greater than 1, and the powers corresponding to the first layer to the $K^{th}$ layer increase successively; and for the $i^{th}$ layer in the K layers, where i is greater than or equal to 1 and less than or equal to K, performs the following steps: separating, by the receiving apparatus, the $i^{th}$-layer to-be-processed symbol from the to-be-processed symbols; performing, by the receiving apparatus, FTN demodulation on the $i^{th}$-layer to-be-processed symbol, to obtain the $i^{th}$-layer demodulated symbol; and making, by the receiving apparatus, decision based on the $i^{th}$-layer demodulated symbol, to obtain the $i^{th}$-layer decision result. By using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

## BRIEF DESCRIPTION OF DRAWINGS

To describe the technical solutions in the embodiments of the present invention more clearly, the following briefly describes the accompanying drawings required for describing the embodiments.

FIG. 1a is a schematic structural diagram of a system to which embodiments of the present invention arc applicable;

FIG. 2a is a schematic flowchart of an FTN-based communication method performed on a sending apparatus side according to an embodiment of the present invention;

FIG. 2b is a schematic flowchart of an FTN-based communication method performed on a receiving apparatus side according to an embodiment of the present invention;

FIG. 2c is a schematic flowchart of another FTN-based communication method performed on a receiving apparatus side according to an embodiment of the present invention;

FIG. 2d is a schematic diagram of an FTN-based communication method jointly performed by a sending apparatus and a receiving apparatus according to an embodiment of the present invention;

FIG. 2e is a schematic flowchart of a method for allocating a power to each layer when i is greater than 1 according to an embodiment of the present invention;

FIG. 2f is a schematic structural diagram of a state transition lattice diagram according to an embodiment of the present invention;

FIG. 2g is a schematic diagram of comparison between a first-layer to $(i-1)^{th}$-layer interference plus noise distribution graph when i is not equal to 1 and a Gaussian distribution graph according to an embodiment of the present invention;

FIG. 2h is a schematic diagram of comparison between a distribution graph of interference plus noise obtained after a significant ISI tap of each of a $j^{th}$ layer to an $(i-1)^{th}$ layer is removed from first-layer to $(i-1)^{th}$-layer interference plus noise when i is not equal to 1 and a Gaussian distribution graph according to an embodiment of the present invention;

FIG. 2i is a schematic structural diagram of another state transition lattice diagram according to an embodiment of the present invention;

FIG. 2j is a schematic diagram of ISI comparison before and after minimum phase system conversion according to an embodiment of the present invention;

FIG. 2k is a schematic diagram of a BER performance result simulated on a Matlab platform according to an embodiment of the present invention;

FIG. 3 is a schematic structural diagram of an FTN-based receiving apparatus according to an embodiment of the present invention;

FIG. 4 is a schematic structural diagram of an FTN-based sending apparatus according to an embodiment of the present invention;

FIG. 5 is a schematic structural diagram of an FTN-based receiving apparatus according to an embodiment of the present invention; and

FIG. 6 is a schematic structural diagram of an FTN-based sending apparatus according to an embodiment of the present invention.

## DESCRIPTION OF EMBODIMENTS

To make the objectives, technical solutions, and beneficial effects of the present invention clearer and more comprehensible, the following further describes the present invention in detail with reference to the accompanying drawings and embodiments. It should be understood that the specific embodiments described herein are merely used to explain the present invention but are not intended to limit the present invention.

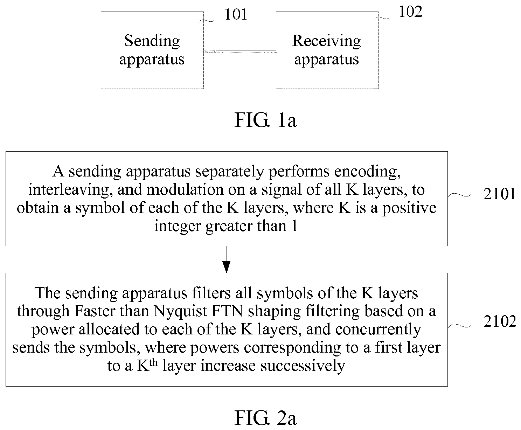

FIG. 1a is a schematic structural diagram of an example of a system to which embodiments of the present invention are applicable. As shown in FIG. 1a, the system architecture includes a sending apparatus 101 and a receiving apparatus 102. The sending apparatus 101 may be a network device or a terminal device in a communications system, and the receiving apparatus 102 may be a network device or a terminal device in the communications system.

The terminal device may communicate with one or more core networks by using a radio access network (Radio Access Network, RAN). The terminal device may be user equipment (User Equipment, "UE" for short), an access terminal, a subscriber unit, a subscriber station, a mobile station, a remote station, a remote terminal, a mobile device, a user terminal, a terminal, a wireless communications device, a user agent, or a user apparatus. The access terminal may be a cellular phone, a cordless phone, a Session Initiation Protocol (Session Initiation Protocol, "SIP" for short) phone, a wireless local loop (Wireless Local Loop, "WLL" for short) station, a personal digital assistant (Personal Digital Assistant, "PDA" for short), a handheld device having a wireless communication function, a computing device, another processing device connected to a wireless modem, an in-vehicle device, a wearable device, or a terminal device in a future 5G network.

The network device may be a device configured to communicate with the terminal device, for example, may be a base transceiver station (Base Transceiver Station, "BTS" for short) in a GSM system or CDMA, may be a Node B (NodeB, "NB" for short) in a WCDMA system, or may be an evolved Node B (evolved Node B, "eNB" or "eNodeB" for short) in an LTE system. Alternatively, the network device may be a relay station, an access point, an in-vehicle device, a wearable device, a network side device in a future 5G network, a network device in a future evolved PLMN network, or the like.

It should be understood that, the technical solutions in the embodiments of the present invention may be applied to various communications systems, such as a Global System for Mobile Communications (Global System for Mobile communications, "GSM" for short) system, a Code Division Multiple Access (Code Division Multiple Access, "CDMA" for short) system, a Wideband Code Division Multiple Access (Wideband Code Division Multiple Access, "WCDMA" for short) system, a general packet radio service (General Packet Radio Service, "GPRS" for short), a Long Term Evolution (Long Term Evolution, "LTE" for short) system, an LTE frequency division duplex (Frequency Division Duplex, "FDD" for short) system, an LTE time division duplex (Time Division Duplex, "TDD" for short) system, a Universal Mobile Telecommunication System (Universal Mobile Telecommunication System, "UMTS" for short), a Worldwide Interoperability for Microwave Access (Worldwide Interoperability for Microwave Access, "WiMAX" for short) communications system, and a future 5G communications system.

FIG. 2a is a schematic flowchart of an example of an FTN-based communication method performed on a sending apparatus side according to an embodiment of the present invention. Based on the foregoing elaboration, this embodiment of the present invention provides the FTN-based communication method performed on the sending apparatus side. As shown in FIG. 2a, the method includes the following steps:

Step 2101. A sending apparatus separately performs encoding, interleaving, and modulation on a signal of all K layers, to obtain a symbol of each of the K layers, where K is a positive integer greater than 1.

Step 2102. The sending apparatus filters all symbols of the K layers through FTN shaping filtering based on a power allocated to each of the K layers, and concurrently sends the symbols, where powers corresponding to a first layer to a K$^{th}$ layer increase successively.

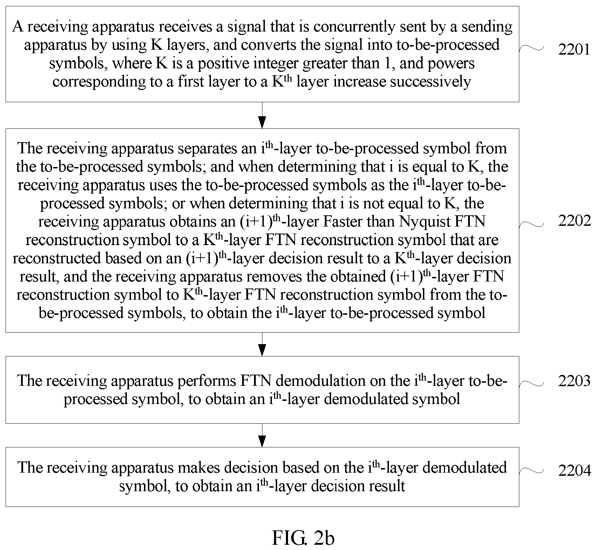

FIG. 2b is a schematic flowchart of an example of an FTN-based communication method performed on a receiving apparatus side according to an embodiment of the present invention. Based on the foregoing elaboration, this embodiment of the present invention provides the FTN-based communication method performed on the receiving apparatus side. As shown in FIG. 2b, the method includes the following steps.

Step 2201. A receiving apparatus receives a signal that is concurrently sent by a sending apparatus by using K layers, and converts the signal into to-be-processed symbols, where K is a positive integer greater than 1, and powers corresponding to a first layer to a K$^{th}$ layer increase successively.

For an i$^{th}$ layer in the K layers, where i is greater than or equal to 1 and less than or equal to K, step 2202 to step 2204 are performed:

Step 2202. The receiving apparatus separates an i$^{th}$-layer to-be-processed symbol from the to-be-processed symbols; and when determining that i is equal to K, the receiving apparatus uses the to-be-processed symbols as the i$^{th}$-layer to-be-processed symbols; or when determining that i is not equal to K, the receiving apparatus obtains an (i+1)$^{th}$-layer FTN reconstruction symbol to a K$^{th}$-layer FTN reconstruction symbol that are reconstructed based on an (i+1)$^{th}$-layer decision result to a K$^{th}$-layer decision result, and the receiving apparatus removes the obtained (i+1)$^{th}$-layer FTN reconstruction symbol to K$^{th}$-layer FTN reconstruction symbol from the to-be-processed symbols, to obtain the i$^{th}$-layer to-be-processed symbol.

Step 2203. The receiving apparatus performs FTN demodulation on the i$^{th}$-layer to-be-processed symbol, to obtain an i$^{th}$-layer demodulated symbol.

Step 2204. The receiving apparatus makes decision based on the i$^{th}$-layer demodulated symbol, to obtain an i$^{th}$-layer decision result.

Optionally, the signal received by the receiving apparatus in step 2201 is obtained in the following manner: The sending apparatus separately performs encoding, interleaving, and modulation on a signal of all K layers, to obtain a symbol of each of the K layers; and the sending apparatus filters all symbols of the K layers through FTN shaping filtering based on the power allocated to each of the K layers.

Optionally, in this embodiment of the present invention, after the sending apparatus converts all symbols of the K layers into the signal and sends the signal, the signal sent by the sending apparatus is affected by noise before being received by the receiving apparatus. After receiving the signal affected by the noise, the receiving apparatus sequentially performs matched filtering and minimum phase system conversion on the signal to obtain the to-be-processed symbols. Then, the receiving apparatus sequentially separates the i$^{th}$-layer to-be-processed symbol from the to-be-processed symbols.

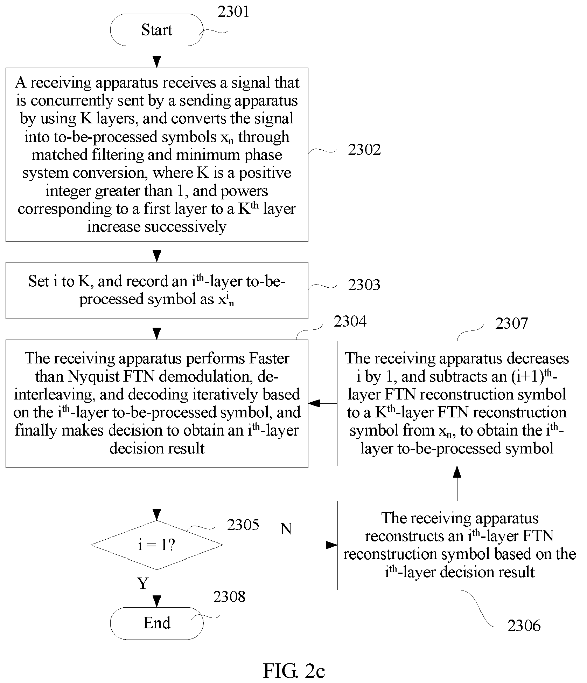

FIG. 2c is a schematic flowchart of an example of another optional FTN-based communication method performed on a receiving apparatus side according to an embodiment of the present invention. As shown in FIG. 2c, the optional FTN-based communication method that is performed on the receiving apparatus side and that is provided in this embodiment of the present invention includes the following steps:

Step 2301. The method starts.

Step 2302. A receiving apparatus receives a signal that is concurrently sent by a sending apparatus by using K layers, and converts the signal into to-be-processed symbols $X_n$ through matched filtering and minimum phase system conversion, where K is a positive integer greater than 1, and powers corresponding to a first layer to a K$^{th}$ layer increase successively.

Step 2303. Set i to K, and record an i$^{th}$-layer to-be-processed symbol as $x_n^i$.

Step 2304. The receiving apparatus performs FTN demodulation, de-interleaving, and decoding based on the i$^{th}$-layer to-be-processed symbol iteratively, and finally makes decision to obtain an i$^{th}$-layer decision result.

Step 2305. Determine whether i is equal to 1, and if i is equal to 1, perform step 2308, or if i is not equal to 1, perform step 2306.

Step 2306. The receiving apparatus reconstructs an i$^{th}$-layer FTN reconstruction symbol based on the i$^{th}$-layer decision result.

Step 2307. The receiving apparatus decreases i by 1, and subtracts an (i+1)$^{th}$-layer FTN reconstruction symbol to a K$^{th}$-layer FTN reconstruction symbol from $X_n$, to obtain the i$^{th}$-layer to-be-processed symbol.

Step 2308. End a process of the method.

It can be learned that in this embodiment of the present invention, multi-layer low-order modulation is equivalent to high-order modulation. To be specific, spectrum efficiency achieved when high-order modulation is used is achieved through multi-layer low-order modulation and concurrent transmission. Therefore, communication based on a layering technology provides relatively high spectrum efficiency. In addition, because low-order modulation is used for each layer, modulation can be performed, with relatively low complexity, for each layer by using an FTN technology, thereby providing feasibility for further improving the spectrum efficiency.

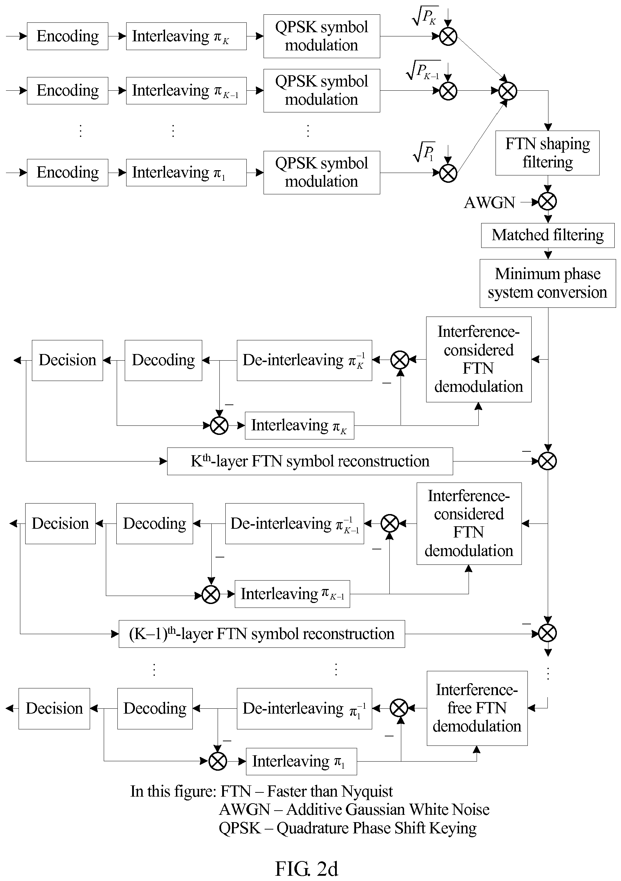

FIG. 2d is a schematic diagram of an example of an FTN-based communication method jointly performed by a sending apparatus and a receiving apparatus according to an embodiment of the present invention. In this embodiment of the present invention, the sending apparatus and the receiving apparatus perform data transmission based on a layering technology.

In an optional specific implementation, the sending apparatus may perform concurrent transmission by using the layering technology, and the sending apparatus encodes data of each layer, and performs interleaving by using different interleavers, for example, an interleaver $\pi_K$ of a $K^{th}$ layer, an interleaver $\pi_{K-1}$ of a $(K-1)^{th}$ layer, ..., and an interleaver $\pi_1$ of a first layer that are shown in FIG. 2d. Then, the sending apparatus performs symbol modulation on interleaved data of each layer, for example, QPSK symbol modulation and mapping to a constellation point, and then allocates a power to each layer, for example, as shown in FIG. 2d, a power $P_K$ allocated to the $K^{th}$ layer, a power $P_{K-1}$ allocated to the $(K-1)^{th}$ layer, ..., a power $P_1$ allocated to the first layer, where $P_K > P_{K-1} > ... > P_1$, to ensure optimal performance when the receiving apparatus demodulates the data of each layer. Then, all symbols of the K layers after power allocation are filtered through FTN shaping filtering, and arrive at the receive end after being affected by a noise. Optionally, the noise may be additive white Gaussian noise (Additive White Gaussian Noise, AWGN for short).

Optionally, the power allocated to each of the K layers is obtained by using the following method: allocating the power to each of the K layers in a sequence from the first layer to the $K^{th}$ layer. In this way, the power can be allocated to each layer more efficiently and accurately.

Optionally, the power allocated to each of the K layers satisfies the following conditions: a system BER is less than a BER threshold, and a sum of the first-layer power to the $K^{th}$-layer power is not greater than a total power threshold. This not only ensures that the system BER satisfies a requirement, but also ensures that the sum of the powers of all layers does not exceed a requirement of the total power threshold, so that performance of an entire system is in an optimal status.

Optionally, the power allocated to each of the K layers is obtained by using the following method: allocating a first-layer power to the first layer, where the first-layer power is a lowest power satisfying that the system BER is less than the BER threshold.

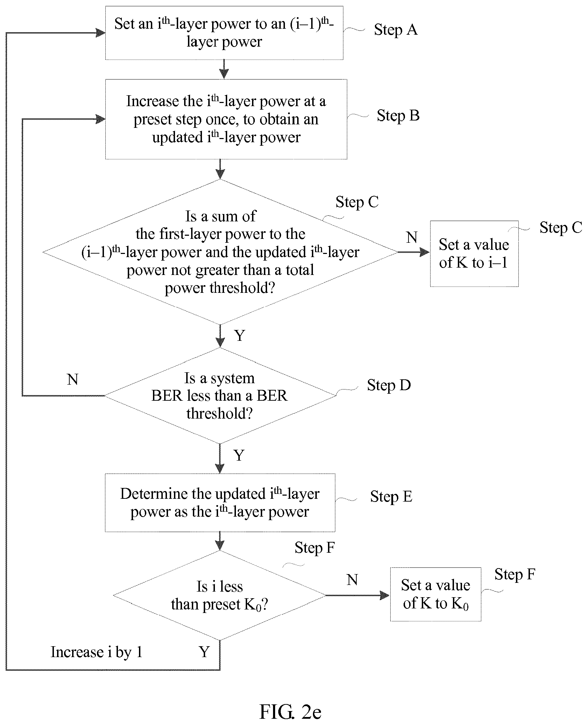

FIG. 2e is a schematic flowchart of an example of a method for allocating a power to each layer when i is greater than 1 according to an embodiment of the present invention, as shown in FIG. 2e:

Step A. Set an $i^{th}$-layer power to an $(i-1)^{th}$-layer power, and perform step B.

Step B. Increase the $i^{th}$-layer power at a preset step once, to obtain an updated $i^{th}$-layer power, and perform step C.

Step C. Perform step D when it is determined that a sum of a first-layer power to the $(i-1)^{th}$-layer power and the updated $i^{th}$-layer power is not greater than the total power threshold. Optionally, a value of K is set to i-1 when it is determined, in step C, that the sum of the first-layer power to the $(i-1)^{th}$-layer power and the updated $i^{th}$-layer power is greater than the total power threshold.

Step D. Perform step E when it is determined that a system BER is less than a BER threshold, or perform step B when it is determined that a system BER is not less than a BER threshold.

Step E. Determine the updated $i^{th}$-layer power as the $i^{th}$-layer power, and perform step F.

Step F. When it is determined that i is less than Ko, increase i by 1, and perform step A. Optionally, the value of K is set to Ko when it is determined, in step F, that i is not less than Ko.

For example, Ko is set to 5. First, a power is allocated to a first layer, then a power is allocated to a second layer, and if the power allocated to the second layer satisfies a condition that "the system BER is less than the BER threshold, and a sum of the first-layer power and the second-layer power is not greater than the total power threshold", a power is allocated to a third layer. In a possible implementation, it is assumed that after powers are sequentially allocated to the third layer, a fourth layer, and a fifth layer, it is determined that the value of K is set to 5, and a sixth-layer power is no longer set.

Optionally, the sending apparatus may determine the value of Ko based on a rate requirement of a system. Specifically, the sending apparatus may calculate the value of Ko based on a required transmission rate. For example, the sending apparatus considers, based on an actual status of current data transmission, that setting five layers can satisfy a current requirement, and the sending apparatus sets Ko to 5. In this case, even though all the first five layers satisfy the preset condition, and a sixth layer is no longer set, to avoid power resource waste.

In another possible implementation, it is assumed that a power is allocated to a third layer, but when a power is allocated to a fourth layer, a sum of the first-layer power to the fourth-layer power is greater than the power threshold. In this case, the value of K is set to 3. To be specific, the value of K cannot be larger, otherwise a power sum exceeds the preset power threshold, to be specific, exceeds a capability of the sending apparatus, leading to a result such as a data sending failure.

By using the foregoing optional method, on one hand, the value of K specified in this embodiment of the present invention can satisfy a requirement of current data transmission as far as possible; and on the other hand, the value of K can satisfy performance of the system itself.

During specific implementation, more layers, to be specific, a larger value of K, indicates that a transmit power needed by the sending apparatus is higher. However, an actual highest transmit power of the sending apparatus is limited to the total power threshold. To be specific, a sum of transmit powers of sending, by the sending apparatus, data of the layers cannot be greater than the total power threshold. Therefore, the foregoing method not only ensures that the system BER satisfies the requirement, but also ensures that the sum of the powers of all layers does not exceed the requirement of the total power threshold.

Another example is used to describe in detail the process of the method for allocating a power to each layer. The BER threshold is $10^{-6}$, and $K_0$ is 5.

In a first step, i is 1, and a first-layer power is set first. The first-layer power is a lowest power satisfying that the system BER is less than the BER threshold. To be specific, there are many powers satisfying that the system BER is less than the BER threshold, and the first-layer power is the smallest value in the range. In other words, under a lowest power requirement, for example, 5 dBm, a system BER (in this case, there is only one layer in the system) is less than the BER threshold.

In a second step, i is 2, a second-layer power is set to the first-layer power 5 dBm, and the second-layer power 5 dBm is gradually increased at a preset step. For example, the preset step is 0.5 dB. Then, an updated second-layer power obtained after being increased for the first time is 5.5 dBm. The second-layer power is increased at the preset step again when it is determined that a sum of the first-layer power and the second-layer power is not greater than the total power threshold and it is further determined that a system BER (in this case, there are two layers in the system) is not less than the BER threshold when the updated second-layer power is 5.5 dBm. To be specific, in this case, the updated second-layer power is 6 dBm. If a sum of the first-layer power and the updated second-layer power is not greater than the total power threshold, and it is further determined that a system BER is less than the BER threshold when the updated second-layer power is 6 dBm, it is determined that the second-layer power is 6 dBm.

In a third step, i is 3, a third-layer power is set to the second-layer power 6 dBm, and the third-layer power 6 dBm is gradually increased at the preset step. Then, the third-layer power is 6.5 dBm after being increased for the first time. In this case, if it is determined that a sum of the first-layer power 5 dBm, the second-layer power 6 dBm, and the updated third-layer power 6.5 dBm is greater than the total power threshold, it is determined that K is 2. To be specific, a largest quantity of layers that is determined by the sending apparatus is 2.

In another possible implementation, it is assumed that it is determined in the third step that a sum of the first-layer power 5 dBm, the second-layer power 6 dBm, and the updated third-layer power 6.5 dBm is not greater than the total power threshold, and a system BER (in this case, there are three layers in the system) is less than the BER threshold when the updated third-layer power is 6.5 dBm, it is determined that the third-layer power is 6.5 dBm. It is assumed that a fourth-layer power 7 dBm and a fifth-layer power 7.5 dBm are sequentially allocated successfully based on the foregoing similar method. In this case, because Ko is preset to 5, it is determined that the value of K is 5 and a sixth layer is no longer configured.

Based on the foregoing descriptions, the sending apparatus filters all symbols of the K layers through FTN shaping filtering, to obtain a to-be-sent signal, and then sends the signal. The signal arrives at the receiving apparatus after being affected by a noise. Optionally, the noise may be additive white Gaussian noise (Additive White Gaussian Noise, AWGN for short). Optionally, the receiving apparatus converts the received signal into to-be-processed symbols through orthogonal basis model-based (Orthogonal Basis Model, OBM for short) matched filtering and minimum phase system conversion, and further processes the to-be-processed symbols.

During specific implementation, in an FTN technology, specifically, a symbol period is compressed in time domain without changing a waveform of a single symbol, to be specific, a signal bandwidth is maintained, to achieve a higher symbol rate. From another perspective, the FTN is equivalent to compressing a signal bandwidth in frequency domain without changing a symbol period, to save a frequency resource. In conclusion, by using the FTN technology, spectrum efficiency is improved, thereby helping alleviate an increasingly prominent spectrum resource crisis. The signal sent by the sending apparatus is affected by a noise and processed by an FTN shaping filter, and the receiving apparatus performs processing through OBM matched filtering, so that noise of various sampling symbols can still be independent of each other. Further, because the symbol bandwidth is compressed through FTN, an optimal sampling point is interfered with by other symbols, and as a result, ISI occurs and waveform distortion is caused. Therefore, an all-pass filter may be added to perform minimum phase conversion on an overall response. In this case, first, the all-pass filter does not change a power spectrum distribution of the signal and the noise, and therefore, the noise in the to-be-processed symbols can still be independent of each other between symbols. Second, in all systems having same amplitude and frequency characteristics, a minimum phase system concentrates taps having a relatively strong energy into a shorter delay interval, so that FTN demodulation complexity can be reduced.

After converting the received signal into the to-be-processed symbols through matched filtering and minimum phase system conversion, the receiving apparatus needs to obtain, from the to-be-processed symbols, the data sent by the sending apparatus. To be specific, the receiving apparatus needs to perform FTN demodulation, de-interleaving, and decoding. Optionally, an FTN demodulation result may be hard decision information or soft decision information, and generally, a soft decision result needs to be obtained when encoding and decoding need to be performed.

Optionally, the receiving apparatus sequentially separates a $K^{th}$-layer to-be-processed symbol to a first-layer to-be-processed symbol based on a power corresponding to each layer. Optionally, that the receiving apparatus separates an $i^{th}$-layer to-be-processed symbol from the to-be-processed symbols after the receiving apparatus converts the received signal into the to-be-processed symbols includes: when determining that i is equal to K, using, by the receiving apparatus, the to-be-processed symbols as the $i^{th}$-layer to-be-processed symbols; or when determining that i is not equal to K, obtaining, by the receiving apparatus, an $(i+1)^{th}$-layer FTN reconstruction symbol to a $K^{th}$-layer FTN reconstruction symbol that are reconstructed based on an $(i+1)^{th}$-layer decision result to a $K^{th}$-layer decision result, and removing, by the receiving apparatus, the obtained $(i+1)^{th}$-layer FTN reconstruction symbol to $K^{th}$-layer FTN reconstruction symbol from the to-be-processed symbols, to obtain the $i^{th}$-layer to-be-processed symbol. In this way, for each layer, an FTN reconstruction symbol of a layer whose power is greater than a power of the layer may be removed, to cancel interference caused on the layer by the layer whose power is greater than the power of the layer.

Specifically, after the receiving apparatus obtains the to-be-processed symbols, because the $K^{th}$ layer is a layer having a highest power, the receiving apparatus may directly use the to-be-processed symbols as $K^{th}$-layer to-be-processed symbols, and then perform FTN demodulation, de-interleaving, and decoding on the $K^{th}$-layer to-be-processed symbol by using an iterative structure, make decision, and output the decision result.

Further, the $K^{th}$-layer FTN reconstruction symbol may be reconstructed based on the $K^{th}$-layer decision result, to obtain the $K^{th}$-layer FTN reconstruction symbol. Optionally, the decision result is hard decision information. In this way, the $K^{th}$-layer FTN reconstruction symbol reconstructed based on the hard decision information is more accurate.

Then, when a $(K-1)^{th}$-layer to-be-processed symbol is demodulated, the $K^{th}$-layer FTN reconstruction symbol is subtracted from the converted to-be-processed symbol, obtained information is used as the $(K-1)^{th}$-layer to-be-processed symbol, and demodulation, de-interleaving, decoding, and decision-making are performed on the $(K-1)^{th}$-layer to-be-processed symbol by using an iterative structure, to obtain a $(K-1)^{th}$-layer decision result. It can be learned that in this case, the $(K-1)^{th}$-layer to-be-processed symbol does not include the $K^{th}$-layer FTN reconstruction symbol, and only a $K^{th}$-layer power is greater than a $(K-1)^{th}$-layer power. To be specific, in this case, interference of the layer having the higher power on the $(K-1)^{th}$-layer to-be-processed symbol has been canceled.

Further, a $(K-1)^{th}$-layer FTN reconstruction symbol may be reconstructed based on the $(K-1)^{th}$-layer decision result, to obtain the $(K-1)^{th}$-layer FTN reconstruction symbol. Then, the $K^{th}$-layer FTN reconstruction symbol and the $(K-1)^{th}$-layer FTN reconstruction symbol are subtracted from the to-be-processed symbols, obtained information is used as a $(K-2)^{th}$-layer to-be-processed symbol, and demodulation, de-interleaving, decoding, and decision-making are performed on the $(K-2)^{th}$-layer to-be-processed symbol by using an iterative structure, to obtain a $(K-2)^{th}$-layer decision result. It can be learned that in this case, the $(K-2)^{th}$-layer to-be-processed symbol does not include the $K^{th}$-layer FTN reconstruction symbol or the $(K-1)^{th}$-layer FTN reconstruction symbol, and only the $K^{th}$-layer power and the $(K-1)^{th}$-layer power are greater than a $(K-2)^{th}$-layer power. To be specific, in this case, interference of the layers having the higher powers on the $(K-2)^{th}$-layer to-be-processed symbol has been canceled.

Specifically, for the first layer, because there is no layer that has a lower power and for which FTN demodulation needs to be performed, first-layer FTN symbol reconstruction does not need to be performed.

In this embodiment of the present invention, for each of the other layers, a method for canceling interference of a layer whose power is greater than a power of the current layer is similar to the foregoing descriptions, and details are not described herein again. By using the foregoing method, decision results of all layers can be obtained, so as to obtain, through estimation, the data sent by the sending apparatus.

In the foregoing process, optionally, that the receiving apparatus performs FTN demodulation on the $i^{th}$-layer to-be-processed symbol to obtain an $i^{th}$-layer demodulated symbol, and makes decision based on the $i^{th}$-layer demodulated symbol, to obtain an $i^{th}$-layer decision result includes:

performing, by the receiving apparatus, FTN demodulation, de-interleaving, and decoding on the $i^{th}$-layer to-be-processed symbol repetitively by using the iterative structure, to obtain an $i^{th}$-layer decoding result after a plurality of iterations; and making, by the receiving apparatus, decision based on the $i^{th}$-layer decoding result, to obtain the $i^{th}$-layer decision result.

To be specific, in this embodiment of the present invention, for each layer, the $i^{th}$-layer decoding result is obtained through a plurality of iterations. In this way, the obtained $i^{th}$-layer decoding result is more accurate. Further, decision can be made more accurately based on the $i^{th}$-layer decoding result, to obtain the more accurate $i^{th}$-layer decision result. Then, the more accurate $i^{th}$-layer FTN reconstruction symbol can be reconstructed based on the $i^{th}$-layer decision result, to more accurately and thoroughly cancel interference of the $i^{th}$-layer FTN reconstruction symbol to the $K^{th}$-layer FTN reconstruction symbol on the $(i-1)^{th}$-layer to-be-processed symbol, in other words, to more accurately cancel extremely high interference of a layer having a higher power on the current layer.

Optionally, that the receiving apparatus performs FTN demodulation, de-interleaving, and decoding on the $i^{th}$-layer to-be-processed symbol repetitively, to obtain the $i^{th}$-layer decoding result after the plurality of iterations includes: for each of the plurality of iterations, performing the following steps:

performing, by the receiving apparatus, FTN demodulation, de-interleaving, and decoding on the $i^{th}$-layer to-be-processed symbol, to obtain an $i^{th}$-layer decoding result of the current iteration; and using the $i^{th}$-layer decoding result of the current iteration as prior information of FTN demodulation in a next iteration process, to perform FTN demodulation, de-interleaving, and decoding of the next iteration.

Specifically, in this embodiment of the present invention, at the $i^{th}$ layer, ISI caused by FTN is considered as internal encoding, channel encoding is considered as external encoding, and processing is performed by using a turbo (Turbo) iterative structure. To be specific, soft decision information fed back after each decoding is used as prior information of FTN demodulation. In this way, after a plurality of iterations, a more accurate decoding result can be obtained. Optionally, FTN demodulation for each layer is performed separately for I and Q channels.

Optionally, because the sending apparatus performs interleaving by using different interleavers, for example, as shown in FIG. 2d, by using the interleaver $\pi_K$ of the $K^{th}$ layer, the interleaver $\pi_{K-1}$ of the $(K-1)^{th}$ layer, ..., and the interleaver $\pi_1$ of the first layer. The receiving apparatus performs de-interleaving by using corresponding de-interleavers and performs interleaving again in an iterative feedback process. For example, as shown in FIG. 2d, for the $K^{th}$ layer, de-interleaving is performed by using a de-interleaver $\pi_K^{-1}$, and interleaving is performed by using the interleaver $\pi_K$ in an iterative feedback process, for the $(K-1)^{th}$ layer, de-interleaving is performed by using a de-interleaver $\pi_{K-1}^{-1}$, and interleaving is performed by using the interleaver $\pi_{K-1}$ in an iterative feedback process, ..., and for the first layer, de-interleaving is performed by using a de-interleaver $\pi_1^{-1}$, and interleaving is performed by using the interleaver $\pi_1$ in an iterative feedback process.

It can be learned that in this embodiment of the present invention, the receiving apparatus implements signal demodulation for each layer by using an iterative loop, makes decision for a decoding result that is of a layer having a higher power and that is obtained after the last iteration, reconstructs an FTN signal, and separates a to-be-processed symbol of each layer from the to-be-processed symbols, to cancel inter-layer interference. Then, FTN demodulation, de-interleaving, and decoding are performed for each layer. Optionally, soft decision information is output after decoding, and the soft decision information is fed back to FTN demodulation in a next iteration after being interleaved again, so that a demodulation result is more accurate. Decision is made for a decoding result obtained after the last iteration of each layer, to obtain a final sink.

Optionally, when FTN demodulation is performed for each layer, FTN demodulation may be performed by using a Bahl, Cocke, Jelinek, and Raviv (Bahl, Cocke, Jelinek, and Raviv, BCJR for short) algorithm and the like. In a demodulation process, first, a state transition lattice diagram is generated, and then a log-likelihood ratio (Log-Likelihood Ratio, LLR for short) is calculated based on the state transition lattice diagram.

For FTN demodulation for the first layer, because the first layer is not interfered with by other layers after a second-layer FTN reconstruction symbol to the $K^{th}$-layer FTN reconstruction symbol are subtracted from the to-be-processed symbols, normal FTN demodulation, namely, interference-free FTN demodulation, may be used. However, for each of the $K^{th}$ layer to the second layer, although interference of a layer having a higher power on the layer is canceled, interference of a layer having a lower power on the layer also exists, and for FTN demodulation for the $K^{th}$ layer to the second layer, interference-considered FTN demodulation provided in this embodiment of the present invention may be used.

Optionally, interference-free FTN demodulation is specifically: When i is equal to 1, the receiving apparatus performs FTN demodulation on the first-layer to-be-processed symbol. Optionally, the BCJR algorithm may be used. The algorithm includes:

generating, by the receiving apparatus, a first-layer state transition lattice diagram for the first layer;
generating, by the receiving apparatus for a plurality of branch transfers and based on the first-layer state transition lattice diagram, a first-layer symbol expected to be output, where optionally, the first-layer symbol expected to be output includes a symbol obtained by multiplying a first-layer expected symbol by a power factor corresponding to the layer; and
calculating, by the receiving apparatus, an LLR of first-layer data based on the first-layer symbol expected to be output.

A generation rule used when the receiving apparatus generates the first-layer symbol expected to be output based on the first-layer state transition lattice diagram satisfies the following formula requirement:

$$\sqrt{P_1}\sum\nolimits_{l=0}^{L-1} f_l a_{n-l}^1 \qquad \text{formula (1)}.$$

In formula (1), $P_1$ is a power corresponding to a first-layer symbol, and $\sqrt{P_1}$ is a power factor corresponding to the first-layer symbol;

L is a preset length of an $i^{th}$-layer ISI tap, and in this case, a value of i is 1;
$f_l$ is an ISI tap coefficient;
$a_{n-l}^1$ is first-layer data corresponding to the state transition lattice diagram; and
n is a data label.

During specific implementation, the algorithm used for FTN demodulation is a de-convolution algorithm; and a tap is a convolution response coefficient in a convolution process, a tap may be a filter coefficient, a linear equalization coefficient, or an inter-symbol interference coefficient, and the ISI tap herein is an inter-symbol interference coefficient.

Specifically, description is provided by using an example in which the first-layer 1 data sent by the sending apparatus is $a_n^1$, and the first-layer to-be-processed symbol separated by the receiving apparatus from the to-be-processed symbols is $x_n^1$. That the receiving apparatus performs FTN demodulation is to obtain $a_n^1$ from $x_n^1$, in other words, is a de-convolution process. The BCJR algorithm is a typical de-convolution algorithm, and therefore, is a reliable FTN demodulation solution.

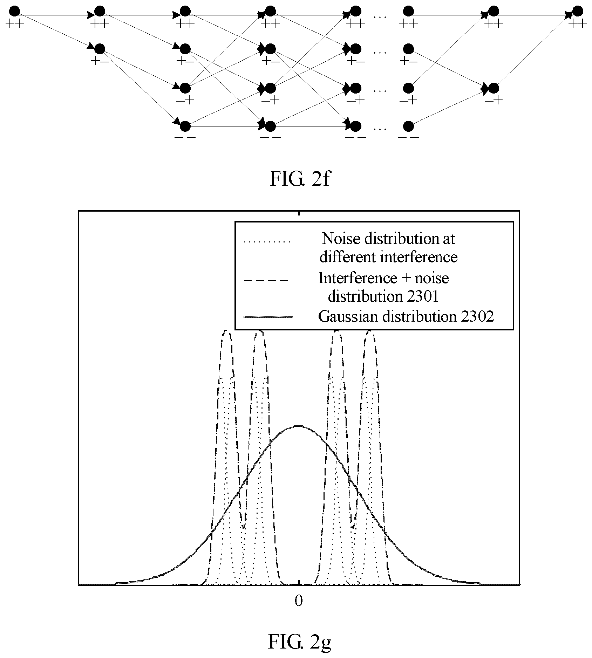

Due to existence of ISI, each symbol expected to be output is not only related to a currently input symbol, but also related to several previous symbols, and values of the several previous symbols are one state. Supposing that the currently input symbol is the first-layer 1 data $a_n^1$ sent by the sending apparatus, and the ISI length is L, the symbol expected to be output and $a_n^1$ are related to a current state $a_{n-L+1}^1 .. a_{n-2}^1 a_{n-1}^1$, and a next state is changed to $a_{n-L+2}^1 .. a_{n-1}^1 a_n^1$. If a quantity of values of each symbol is M, to be specific, a quantity of values of a symbol of each of I and Q channels is $\sqrt{M}$, a quantity of single-channel states is $M^{(L-1)/2}$, and there are $\sqrt{M}$ branches of transferring from the current state to a next state. In other words, a total quantity of branch transfers is $M^{L/2}$. The BCJR algorithm is designed based on the state transition lattice diagram. FIG. 2f shows an example of the state transition lattice diagram according to an embodiment of the present invention. As shown in FIG. 2f, a corresponding lattice diagram is provided by using an example in which L = 3 and M = 4. "+" and "-" respectively represent 1 and -1, and corresponding binary bits are respectively 0 and 1. An initial state and an end state are both recorded as "++".

In the BCJR algorithm, soft decision information, usually an LLR, of each bit needs to be obtained. In this way, calculation needs to be performed by using a branch transfer probability, a forward state probability, and a backward state probability. The calculation items are explained by using a first calculation item, a second calculation item, a third calculation item, and a fourth calculation item.

First calculation item: branch transfer probability

The branch transfer probability is used to describe a probability of transferring from one state to another state. Supposing that an $n^{th}$ input symbol enables a state to transfer from $a_{n-L+1}^1 .. a_{n-2}^1 a_{n-1}^1$ to $a_{n-L+2}^1 .. a_{n-1}^1 a_n^1$, if there is no noise, a corresponding symbol expected to be output is $\sqrt{P_1}\sum\nolimits_{l=0}^{L-1} f_l a_{n-l}^1$ in formula (1). Due to existence of a noise, there is a particular difference between an actually received signal $x_n^1$ and $\sqrt{P_1}\sum\nolimits_{l=0}^{L-1} f_l a_{n-l}^1$, and a branch transfer probability of transferring from $s' = a_{n-L+1}^1 \ldots a_{n-2}^1 a_{n-1}^1$ to $s = a_{n-L+2}^1 \ldots a_{n-1}^1 a_n^1$ may be obtained through calculation based on this according to formula (2):

$$p\left(s' \to s \mid x_n^1\right) = \Pr\left(a_n^1\right) \frac{1}{\sqrt{2\pi N}} \exp\left[-\frac{\left(x_n^1 - \sqrt{P_1}\sum_{l=0}^{L-1} f_l a_{n-l}^1\right)^2}{2N}\right] \quad \text{formula (2)}.$$

In formula (2):

$p\left(s' \to s \mid x_n^1\right)$ is a corresponding branch transfer probability of transferring from the state $s' = a_{n-L+1}^1 \ldots a_{n-2}^1 a_{n-1}^1$ to $s = a_{n-L+2}^1 \ldots a_{n-1}^1 a_n^1$ when the first-layer to-be-processed symbol is $x_n^1$;

$\Pr\left(a_n^1\right)$ is a prior probability that a value of an $n^{\text{th}}$ symbol of the first layer is $a_n^1$, and is obtained through calculation by inputting decoded soft decision information of a previous iteration to the interleaver $\pi_1$, and for the first iteration, a value of $\Pr\left(a_n^1\right)$ is 1/2;

N is a power of single-channel noise, and $\pi$ is a pi constant;

$\sqrt{P_1}\sum_{l=0}^{L-1} f_l a_{n-l}^1$ is a first-layer symbol expected to be output in formula (1); and

$x_n^1$ is the first-layer to-be-processed symbol.

In formula (2), $s'$ has $M^{(L-1)/2}$ possible values, and each value corresponds to $\sqrt{M}$ transfers. Therefore, $M^{L/2}$ branch transfer probabilities (excluding an initial level and an end level) needs to be calculated for each level of the lattice diagram.

Second calculation item: forward state probability

The forward state probability describes a probability of each state at each level, that is, at each symbol sampling time point, being calculated recursively from front to back, and may be expressed as formula (3):

$$\alpha_n(s) = p(S_n = s \mid x_n^1) = \sum_{s'} \alpha_{n-1}(s') p\left(s' \to s \mid x_n^1\right) \quad \text{formula (3)}.$$

In formula (3):

$\alpha_n(s)$ and $p(S_n = s \mid x_n^1)$ are forward state probabilities of a state $s$ at a time point n that are calculated recursively from front to back;

$p\left(s' \to s \mid x_n^1\right)$ is a branch transfer probability that corresponds to $x_n^1$ and that is of transferring from $s' = a_{n-L+1}^1 \ldots a_{n-2}^1 a_{n-1}^1$ to $s = a_{n-L+2}^1 \ldots a_{n-1}^1 a_n^1$ in formula (2); and

$\alpha_{n-1}(s')$ is a forward state probability that is of a state $s'$ at a time point n-1 and that is calculated recursively from front to back, and a value set of $s'$ may be a set of all states that can be transferred to s.

Third calculation item: backward state probability

The backward state probability describes a probability of each state at each level, that is, at each symbol sampling time point, being calculated recursively from back to front, and may be expressed as formula (4):

$$\beta_n(s) = p(S_n = s \mid x_{n+1}^1) = \sum_{s'} \beta_{n+1}(s') p\left(s \to s' \mid x_{n+1}^1\right)$$

formula (4).

In formula (4):

$\beta_n(s)$ and $p\left(S_n = s \mid x_{n+1}^1\right)$ are backward state probabilities of a state s at a time point n that are calculated recursively from back to front;

$p\left(s \to s' \mid x_{n+1}^1\right)$ is a branch transfer probability that corresponds to a symbol $x_{n+1}^1$ and that is of transferring from $s = a_{n-L+2}^1 \ldots a_{n-1}^1 a_n^1$ to $s' = a_{n-L+3}^1 \ldots a_n^1 a_{n+1}^1$;

$$p\left(s \to s' \mid x_{n+1}^1\right) = \Pr\left(a_{n+1}^1\right) \frac{1}{\sqrt{2\pi N}} \exp\left[-\frac{\left(x_{n+1}^1 - \sqrt{P_1} \sum_{l=0}^{L-1} f_l a_{n-l+1}^1\right)^2}{2N}\right];$$

$\beta_{n+1}(s')$ is a backward state probability that is of a state $s'$ at a time point n+1 and that is calculated recursively from back to front; and
a value set of $s'$ may be a set of all states to which the state s can be transferred.

Fourth calculation item: LLR

The LLR may be expressed by using formula (5):

$$\lambda_n = \ln \frac{\sum_{[s_1', s_1]} \alpha_{n-1}(s_1') p\left(s_1' \to s_1 \mid x_n^1\right) \beta_n(s_1)}{\sum_{[s_0', s_0]} \alpha_{n-1}(s_0') p\left(s_0' \to s_0 \mid x_n^1\right) \beta_n(s_0)}$$

formula (5).

In formula (5), a value set of $[s_1', s_1]$ is a combination of all corresponding states whose current bits are 1 during a state transition $s_1' \to s_1$, a value set of $[s_0', s_0]$ is a combination of all states whose current bits are 0 during a state transition $s_0' \to s_0$, $s_1' \to s_1$ represents a transfer from a state $s_1'$ to a state $s_1$, and $s_0' \to s_0$ represents a transfer from a state $s_0'$ to a state $s_0$;

$\beta_n(s_1)$ is a backward state probability that is of the state $s_1$ at a time point n and that is calculated recursively from back to front;
$\beta_n(s_0)$ is a backward state probability that is of the state $s_0$ at the time point n and that is calculated recursively from back to front;
$\alpha_{n-1}(s_1')$ is a forward state probability that is of the state $s_1'$ at a time point n-1 and that is calculated recursively from front to back;
$\alpha_{n-1}(s_0')$ is a forward state probability that is of the state $s_0'$ at the time point n-1 and that is calculated recursively from front to back;

$p\left(s_1' \to s_1 \mid x_n^1\right)$ is a branch transfer probability that corresponds to $x_n^1$ and that is of transferring from $s_1'$ to $s_1$; and

$p\left(s_0' \to s_0 \mid x_n^1\right)$ is a branch transfer probability that corresponds to $x_n^1$ and that is of transferring from $s_0'$ to $s_0$.

Optionally, to further reduce FTN demodulation complexity, FTN demodulation may be performed by using an M-BCJR algorithm. Specifically, for each level, several states having relatively high probabilities are selected for recursive calculation, a branch transfer probability, a forward state probability, and a backward state probability are not calculated for all states, and for a state that is not selected, a corresponding probability is set to 0.

FIG. 2g is a schematic diagram of an example of comparison between a first-layer to (i-1)th-layer interference plus noise distribution graph when i is not equal to 1 and a Gaussian distribution graph according to an embodiment of the present invention. It can be learned from FIG. 2g that when i is not equal to 1, there is a relatively big difference between an interference + noise distribution 2301 and a Gaussian distribution 2302, where + represents plus. Therefore, if interference-free FTN demodulation is performed for an ith layer when i is not equal to 1, to be specific, the interference plus noise distribution graph is considered as the Gaussian distribution graph, a relatively big error exists, and a relatively big error exists in calculating a branch transfer probability. In this case, to reduce impact of interference when i is not equal to 1, a power difference between layers needs to be increased. This inevitably leads to higher power overheads and worse performance. Some noise distributions in other interference cases are shown in FIG. 2g, and are not discussed herein.

Optionally, interference-considered FTN demodulation is specifically: When i is not equal to 1, that the receiving apparatus performs FTN demodulation on the ith-layer to-be-processed symbol to obtain the ith-layer demodulated symbol includes:

generating, by the receiving apparatus, an ith-layer state transition lattice diagram for a jth layer to the ith layer; and

performing, by the receiving apparatus, FTN demodulation on the ith-layer to-be-processed symbol based on the ith-layer state transition lattice diagram, where each of the jth layer to an (i-1)th layer is a preset layer causing interference greater than an interference threshold to the ith layer, and j is greater than or equal to 1 and less than or equal to i-1.

Optionally, that the receiving apparatus generates the ith-layer state transition lattice diagram for the jth layer to the ith layer includes: generating, by the receiving apparatus, a state transition lattice diagram for an ith-layer ISI tap and a significant ISI tap of each of the jth layer to the (i-1)th layer, where the significant ISI tap of each of the jth layer to the (i-1)th layer is an ISI tap that is of each of the jth layer to the (i-1)th layer and whose energy is greater than an energy threshold corresponding to the ith layer.

Specifically, when j is greater than or equal to 1 and less than or equal to i-1, the jth layer includes one or more ISI taps. These ISI taps fall into two types: a significant ISI tap and a non-significant ISI tap. A jth-layer significant ISI tap is an ISI tap whose energy is greater than the energy threshold corresponding to the ith layer in all ISI taps of the jth layer; and a jth-layer non-significant ISI tap is an ISI tap whose energy is not greater than the energy threshold corresponding to the ith layer in all ISI taps of the jth layer. Optionally, energy thresholds corresponding to any two of the K layers are different.

For example, a power of a fifth layer is 20 dBm, and in this case, an energy threshold corresponding to the fifth layer is 2 dBm. To be specific, in addition to that a fifth-layer ISI tap causes relatively severe interference on a fifth-layer symbol, a significant ISI tap whose energy is greater than 2 dBm in a first layer to a fourth layer also causes severe interference on the fifth-layer symbol. In this case, the interference caused on the fifth-layer symbol by the significant ISI tap whose energy is greater than 2 dBm cannot be approximate to Gaussian noise. Therefore, the significant ISI tap whose energy is greater than 2 dBm needs to be considered in the state transition lattice diagram, to better deal with the interference caused on the fifth-layer symbol by the significant ISI tap whose energy is greater than 2 dBm. Supposing that only energy of significant ISI taps of the third layer and the fourth layer is greater than 2 dBm, correspondingly, j is set to 3. Optionally, the energy may be equivalent to a power, and the energy threshold may be equivalent to a power threshold. Powers of layers are different, and therefore, energy thresholds corresponding to the layers are also different.

Optionally, that the receiving apparatus performs FTN demodulation on the ith-layer to-be-processed symbol based on the state transition lattice diagram by using the interference-considered BCJR algorithm includes:

generating, by the receiving apparatus based on the state transition lattice diagram, an ith-layer symbol expected to be output, where the ith-layer symbol expected to be output includes a sum of symbols obtained by multiplying jth-layer to ith-layer symbols by power factors corresponding to the layers; and calculating, by the receiving apparatus, an ith-layer log-likelihood ratio LLR based on the ith-layer symbol expected to be output.

Optionally, in this embodiment of the present invention, a significant ISI tap of each of the jth layer to the (i-1)th layer is considered in state transition, and then a remaining non-significant ISI tap of each of the jth layer to the (i-1)th layer, ISI taps of the first layer to the (j-1)th layer, and noise are considered as Gaussian noise for processing. FIG. 2h is a schematic diagram of an example of comparison between a distribution graph of interference plus noise obtained after the significant ISI tap of each of the jth layer to the (i-1)th layer is removed from first-layer to (i-1)th-layer interference plus noise when i is not equal to 1 and a Gaussian distribution graph according to an embodiment of the present invention. It can be learned from FIG. 2h that after the significant ISI tap of each of the jth layer to the (i-1)th layer is removed, an interference + noise distribution 2401 is relatively close to a Gaussian distribution 2402, where + represents plus. To be specific, interference-considered FTN demodulation is performed for the ith layer when i is not equal to 1. To be specific, the significant ISI tap of each of the jth layer to the (i-1)th layer is considered in the state transition lattice diagram, and then the remaining interference plus noise is considered as a Gaussian distribution, so that accuracy is relatively high, and no relatively big error exists. Some noise distributions in other interference cases are shown in FIG. 2h, and are not discussed herein.

For example, K is 5, and a quantity of highest-interference layers is preset to two based on an interference energy threshold. In this case, when FTN demodulation is performed on a fifth-layer to-be-processed symbol, FTN demodulation needs to be performed based on a state transition lattice diagram generated for the third layer to the fifth layer. To be specific, a fourth-layer to-be-processed symbol and a third-layer to-be-processed symbol impose highest interference on the fifth-layer to-be-processed symbol, and interference degrees are greater than an interference threshold, while a second-layer to-be-processed symbol and a first-layer to-be-processed symbol impose little impact on the fifth-layer to-be-processed symbol. Interference plus noise of all first-layer ISI taps, all second-layer ISI taps, a third-layer non-significant ISI tap, and a fourth-layer non-significant ISI tap on the fifth-layer are considered as Gaussian noise for processing. To be specific, in this case, j is preset to 3 when i is 5. When FTN demodulation is performed on the fourth-layer to-be-processed symbol, because a fifth-layer FTN reconstruction symbol is removed from the fourth-layer to-be-processed symbol, in this case, FTN demodulation needs to be performed based only on a state transition lattice diagram generated for a fourth-layer ISI tap and a significant ISI tap of each of the second layer and the third layer. To be specific, the second-layer to-be-processed symbol and the third-layer to-be-processed symbol impose highest interference on the fourth-layer to-be-processed symbol, and interference degrees are greater than an interference threshold, while the first-layer to-be-processed symbol imposes relatively little impact on the fourth-layer to-be-processed symbol. Interference plus noise of all first-layer ISI taps, a second-layer non-significant ISI tap, and a third-layer non-significant ISI tap on the fourth-layer are considered as Gaussian noise for processing. To be specific, in this case, j is preset to 2 when i is 4.

Further, optionally, in the foregoing example, when FTN demodulation is performed on the fifth-layer to-be-processed symbol, FTN demodulation is performed based on a state transition lattice diagram generated for a fifth-layer ISI tap, and a significant ISI tap of each of the third layer and the fourth layer. To be specific, in addition to the fifth-layer ISI tap, several significant ISI taps imposing relatively high interference on the fifth layer need to be selected from a layer whose interference degree is greater than the interference threshold and the significant ISI taps need to be considered, and ISI taps of the third layer and the fourth layer other than the significant ISI taps, and the ISI tap of each of the first layer and the second layer are considered as Gaussian noise for processing.

Optionally, a generation rule used when the receiving apparatus generates, for each branch transfer and based on the state transition lattice diagram, the $i^{th}$-layer symbol expected to be output satisfies the following formula requirement:

$$\sqrt{P_i}\sum_{l=0}^{L-1}f_l a_{n-l}^i + \sqrt{P_{i-1}}\sum_{l=0}^{L_1-1}f_l a_{n-l}^{i-1} + \cdots + \sqrt{P_{i-m}}\sum_{l=0}^{L_m-1}f_l a_{n-l}^{i-m} + \cdots + \sqrt{P_j}\sum_{l=0}^{L_{i-j}-1}f_l a_{n-l}^j \qquad \text{formula (6)}$$

In formula (6), $P_i$ is a power corresponding to the $i^{th}$-layer symbol, $P_{i-1}$ is a power corresponding to an $(i-1)^{th}$-layer symbol, $P_{i-m}$ is a power corresponding to an $(i-m)^{th}$-layer symbol, $P_j$ is a power corresponding to the $j^{th}$-layer symbol, $\sqrt{P_i}$ is a power factor corresponding to the $i^{th}$-layer symbol, $\sqrt{P_{i-1}}$ a power factor corresponding to the $(i-1)^{th}$-layer symbol, $\sqrt{P_{i-m}}$ is a power factor corresponding to the $(i-m)^{th}$-layer symbol, and $\sqrt{P_j}$ is a power factor corresponding to the $j^{th}$-layer symbol;

L is a preset length of the $i^{th}$-layer ISI tap, $L_1$ is a preset length of the $(i-1)^{th}$-layer significant ISI tap, $L_m$ is a preset length of an $(i-m)^{th}$-layer significant ISI tap, and $L_{i-j}$ is a preset length of the $j^{th}$-layer significant ISI tap; $\sqrt{P_{i-1}}\sum_{l=0}^{L_1-1}f_l a_{n-l}^{i-1}$ is an $i^{th}$-layer symbol component, $\sqrt{P_{i-1}}\sum_{l=0}^{L_1-1}f_l a_{n-l}^{i-1}$ is an $(i-1)^{th}$-layer symbol component when the significant ISI tap is considered, $\sqrt{P_{i-m}}\sum_{l=0}^{L_m-1}f_l a_{n-l}^{i-m}$ is an $(i-m)^{th}$-layer symbol component when the significant ISI tap is considered, and $\sqrt{P_j}\sum_{l=0}^{L_{i-j}-1}f_l a_{n-l}^j$ is a $j^{th}$-layer symbol component when the significant ISI tap is considered;

m is an integer, and any integer in [1, i-j] is taken as m;

$f_l$ is an ISI tap coefficient; $a_{n-l}^i$ is $i^{th}$-layer data corresponding to the state transition lattice diagram, $a_{n-l}^{i-1}$ is $(i-1)^{th}$-layer data corresponding to the state transition lattice diagram, $a_{n-l}^{i-m}$ is $(i-m)^{th}$-layer data corresponding to the state transition lattice diagram, and $a_{n-l}^j$ is $j^{th}$-layer data corresponding to the state transition lattice diagram; and

n is a data label.

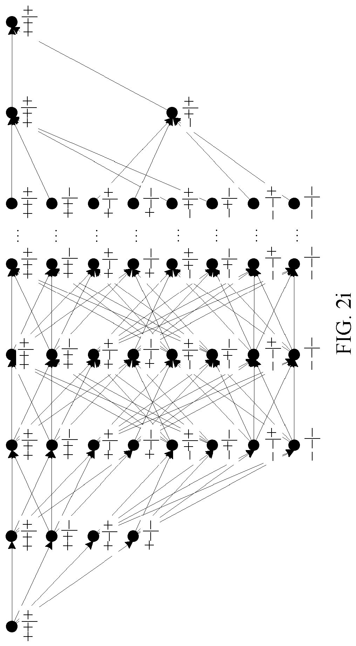

During specific implementation, usually a few interference taps having highest interference distinguish an interference plus noise distribution of an ith-layer to-be-processed symbol from a Gaussian distribution. Therefore, during state transition, only a few significant ISI taps of an interference layer whose interference degree exceeds the interference threshold need to be considered. FIG. 2i is a schematic structural diagram of an example of another state transition lattice diagram according to an embodiment of the present invention. As shown in FIG. 2i, supposing that an ISI length considered for a current layer is L, an ISI length considered for an interference layer (that is, a jth layer to an (i-)[th] layer, herein it is assumed that j = i -1, the considered interference layer is only the (i-)[th] layer) whose interference degree exceeds an interference threshold is $L_1$, and $a_n^i$ and $a_n^{i-1}$ respectively represent a symbol of a current layer and a symbol of the considered interference layer, one state transition process may be recorded as:

$$\left( a_{n-L+1}^i \cdots a_{n-2}^i a_{n-1}^i \,|\, a_{n-L+1}^{i-1} \cdots a_{n-2}^{i-1} a_{n-1}^{i-1} \right) \rightarrow \left( a_{n-L+2}^i \cdots a_{n-1}^i a_n^i \,|\, a_{n-L+2}^{i-1} \cdots a_{n-1}^{i-1} a_n^{i-1} \right) .$$

When QPSK modulation is performed, a quantity of states of each of I and Q channels is $2^{L+L_1-2}$, and a quantity of branches of transferring from each state to a next state is 4 (Note: values of $a_n^i$ and $a_n^{i-1}$ both may be 1 or -1). In FIG. 2i, that L = 3 and □ is used as an example.

Specifically, description is provided by using an example in which the data sent by the sending apparatus is $a_n^i$, and the ith-layer to-be-processed symbol separated by the receiving apparatus from the to-be-processed symbols $x_n$ is $x_n^i$. Based on the lattice diagram shown in FIG. 2i, a significant interference tap of an interference layer whose interference degree exceeds the interference threshold needs to be considered when a branch transfer probability is calculated. Using the ith layer as an example, for FTN demodulation for the ith layer, supposing that the interference layer whose interference degree exceeds the interference threshold is only the (i-1)th layer, the nth input symbol enables a state to transfer from $a_{n-L+1}^i \cdots a_{n-2}^i a_{n-1}^i \,|\, a_{n-L+1}^{i-1} \cdots a_{n-2}^{i-1} a_{n-1}^{i-1}$ to $a_{n-L+2}^i \cdots a_{n-1}^i a_n^i \,|\, a_{n-L+2}^{i-1} \cdots a_{n-1}^{i-1} a_n^{i-1}$, and no noise or other interference is considered, a corresponding symbol expected to be output is $\sqrt{P_i}\sum_{l=0}^{L-1} f_l a_{n-l}^i + \sqrt{P_{i-1}}\sum_{l=0}^{L_1-1} f_l a_{n-l}^{i-1}$ that is obtained through calculation according to formula (6). Due to existence of the noise and other interference, there is a particular difference between an actually received ith-layer to-be-processed symbol $x_n^i$ and $\sqrt{P_i}\sum_{l=0}^{L-1} f_l a_{n-l}^i + \sqrt{P_{i-1}}\sum_{l=0}^{L_1-1} f_l a_{n-l}^{i-1}$, and the branch transfer probability of transferring from $s' = a_{n-L+1}^i \cdots a_{n-2}^i a_{n-1}^i \,|\, a_{n-L+1}^{i-1} \cdots a_{n-2}^{i-1} a_{n-1}^{i-1}$ to $s = a_{n-L+2}^i \cdots a_{n-1}^i a_n^i \,|\, a_{n-L+2}^{i-1} \cdots a_{n-1}^{i-1} a_n^{i-1}$ may be obtained through calculation based on this according to formula (7):

$$p\left(s' \rightarrow s \,|\, x_n^i\right) = \Pr\left(a_n^i\right) \frac{1}{\sqrt{2\pi N}} \exp\left[ -\frac{\left[ x_n^i - \left(\sqrt{P_i}\sum_{l=0}^{L-1} f_l a_{n-l}^i + \sqrt{P_{i-1}}\sum_{l=0}^{L_1-1} f_l a_{n-l}^{i-1}\right)\right]^2}{2N} \right]$$ formula (7).

In formula (7), $p\left(s' \rightarrow s \,|\, x_n^i\right)$ is a branch transfer probability that corresponds to $x_n^i$ and that is of transferring from $s' = a_{n-L+1}^i \cdots a_{n-2}^i a_{n-1}^i \,|\, a_{n-L+1}^{i-1} \cdots a_{n-2}^{i-1} a_{n-1}^{i-1}$ to $s = a_{n-L+2}^i \cdots a_{n-1}^i a_n^i \,|\, a_{n-L+2}^{i-1} \cdots a_{n-1}^{i-1} a_n^{i-1}$; $\Pr\left(a_n^i\right)$ is a prior probability that a value of an nth symbol of the ith layer is $a_n^i$, and is obtained through calculation by inputting decoded soft decision information of a previous iteration to the interleaver $\pi_i$, and for the first iteration, a value of $\Pr\left(a_n^i\right)$ is 1/2;

N represents a sum of a power of single-channel noise and a power of other interference that is not considered in a state transition process, and because this part does not include an interference tap having a relatively strong energy, a distribution characteristic of the single-channel noise and the other interference is relatively close to that of the Gaussian distribution;

$\pi$ is a pi constant; $\sqrt{P_i}\sum_{l=0}^{L-1}f_l a_{n-l}^i + \sqrt{P_{i-1}}\sum_{l=0}^{L_1-1}f_l a_{n-l}^{i-1}$ is the i$^{th}$-layer symbol expected to be output that is obtained through calculation according to formula (6); and $x_n^i$ is the i$^{th}$-layer to-be-processed symbol.

Then, the foregoing formula (3), formula (4), and formula (5) are respectively used to calculate the forward state probability, a backward state probability, and a bit LLR. In this case, when calculation is performed separately according to formula (3), formula (4), and i formula (5), $x_n^i$ needs to be substituted into the formulas for calculation. In addition, states in formula (3), formula (4), and formula (5) need to be changed, to be specific, transfer is performed from $s' = a_{n-L+1}^i \cdots a_{n-2}^i a_{n-1}^i \mid a_{n-L+1}^{i-1} \cdots a_{n-2}^{i-1} a_{n-1}^{i-1}$ to $s = a_{n-L+2}^i \cdots a_{n-1}^i a_n^i \mid a_{n-L+2}^{i-1} \cdots a_{n-1}^{i-1} a_n^{i-1}$.

Optionally, during specific implementation, in addition to the BCJR algorithm, an algorithm such as Viterbi may also be used for de-convolution, and the algorithm is also performed based on a state transition lattice diagram. The method may also be used as the interference-considered FTN demodulation method in the present invention. To be specific, in this embodiment of the present invention, when i is not equal to 1, there are a plurality of specific algorithms used when the receiving apparatus performs FTN demodulation on the i$^{th}$-layer to-be-processed symbol based on the state transition lattice diagram generated for the j$^{th}$ layer to the i$^{th}$ layer. The specific algorithm may be the BCJR algorithm, or may be another de-convolution algorithm such as Viterbi.

The following can be obtained through analysis by using the foregoing method provided in this embodiment of the present invention and based on the lattice diagram shown in FIG. 2i: In this embodiment of the present invention, for conventional MQAM modulation, a corresponding quantity of layers is log$_4$M (considering that QPSK modulation is used for each layer). FTN demodulation is performed separately for I and Q channels at each layer. Similarly, it is assumed that only a highest-interference layer is an interference layer whose interference degree exceeds the interference threshold, and for the K$^{th}$ layer to the second layer, L is an ISI length of a current layer, and $L_1$ is a length of a significant ISI tap of the highest-interference layer. In this case, a quantity of single-channel states is $2^{L+L_1-2}$, and a quantity of branch transfers is $2^{L+L_1}$. For the first layer, a quantity of single-channel states is $2^{L-1}$, and a quantity of branch transfers is $2^L$. In this way, a total quantity of states is $2\times(\log_4 M-1)\times2^{L+L_1-2}+2\times2^{L-1}$, a quantity of branch transfers is $2\times(\log_4 M-1)\times2^{L+L_1}+2\times2^L$, and is in a logarithmic relationship with a base of a number system of modulation. Using an example in which L = 10 and $L_1$=5, Table 2 gives specific values of quantities of states and quantities of branch transfers of a multi-layer structure in different modulation schemes (herein, only a single iteration is considered).

**Table 2: Quantities of states and quantities of branch transfers of a multi-layer structure in different modulation schemes**

| Modulation scheme | Corresponding quantity of layers | Quantity of states | Quantity of branch transfers |
|---|---|---|---|
| QPSK | 1 | 1024 | 2048 |
| 16QAM | 2 | 17408 | 67584 |
| 64QAM | 3 | 33792 | 133120 |
| 256QAM | 4 | 50176 | 198656 |
| 1024QAM | 5 | 66560 | 264192 |
| 4096QAM | 6 | 82944 | 329728 |
| 16384QAM | 7 | 99328 | 395264 |

It can be learned that, compared with the quantity of states and the quantity of branch transfers shown in Table 1 in the background, values are greatly reduced. To be specific, compared with a case in which high-order QAM modulation is directly used as FTN demodulation based on a BCJR algorithm, in this embodiment of the present invention, complexity can be greatly reduced. In addition, during actual operation, an idea of the M-BCJR algorithm may be used, to select a few states having relatively high probabilities, to perform calculation. In this way, a quantity of states and a quantity of branch transfers are far less than the results shown in Table 2.

To further describe the method provided in the embodiments of the present invention and the beneficial effects, description is provided below by using a specific example. Main conditions include: (1) An FTN compression ratio is 4/7, and a roll-off factor of a used root-raised cosine (Root-Raised Cosine, RRC for short) shaping filter is 0.2; (2) it is required to achieve spectrum efficiency of 16384QAM modulation; (3) an encoding scheme is low density parity check code (Low Density Parity Check Code, LDPC for short) encoding with a bit rate of 0.8.

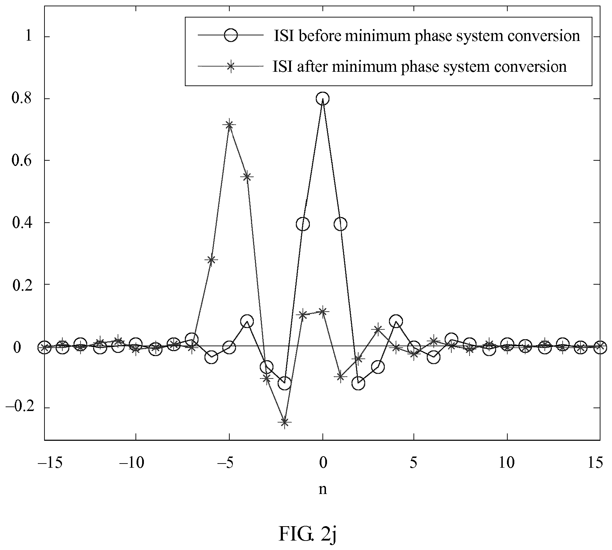

FIG. 2j is a schematic diagram of an example of ISI comparison before and after minimum phase system conversion according to an embodiment of the present invention. As shown in FIG. 2j, before the minimum phase system conversion is performed, ISI generated during FTN is symmetrically distributed with n = 0 as the center. After the minimum phase system conversion is performed, ISI is more concentrated, and ISI may be ignored when n is less than -6. Because the minimum phase system conversion is an all-pass filtering process, frequency-domain amplitude spectrums corresponding to the two pieces of ISI are the same.

In an implementation process, for a current layer of FTN demodulation, starting from n = -6 in FIG. 2j, a considered ISI length is 10, in other words, [0.2782 0.7162 0.5489 -0.1054 -0.2435 0.0996 0.1100 -0.0973 -0.0417 0.0555]. For each layer other than a first layer, a length of a significant ISI tap of a highest-interference layer (herein, it is assumed that j = i - 1) is considered, and is the foregoing first five tap coefficients.

To achieve spectrum efficiency the same as that of 16384QAM modulation, when the compression ratio is 4/7, correspondingly, there are four layers. When single-channel demodulation is performed for a second layer to a fourth layer, $2^{13}$ = 8192 states and $2^{15}$ = 32768 branch transfers are involved. For a first layer, $2^9$ = 512 states and $2^{10}$ = 1024 branch transfers are involved. In a state transition lattice diagram, only 128 states having highest probabilities are reserved for each level. In this way, only 512 branch transfers are involved in a single channel of each of the second layer to the fourth layer, and only 256 branch transfers are involved in a single channel of the first layer.

On a sending apparatus side, a target BER is preset to $10^{-6}$, and power allocation is performed based on the optional method for allocating, by the sending apparatus, the power in the foregoing content of the embodiments of the present invention. It is assumed that a maximum signal power allows four-layer transmission, power differences between layers may be obtained. Using a first-layer power as a reference, powers of the second to the fourth layers need to be obtained by increasing the first-layer power respectively by 8.9141 dB, 9.0781 dB, and 8.9297 dB. In a BER performance testing process, for cases of different Eb/N0 (Eb represents average signal energy of each bit, and NO represents a power spectrum density of a noise), it needs to be ensured that power differences between layers are unchanged.

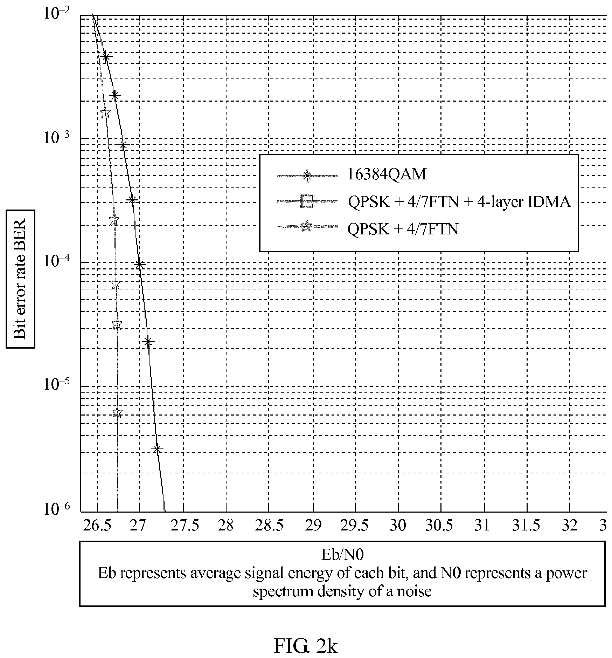

FIG. 2k is a schematic diagram of an example of a BER performance result simulated on a Matlab platform according to an embodiment of the present invention. As shown in FIG. 2k, compared with 16384QAM modulation that does not use FTN, in this embodiment of the present invention, demodulation of each layer requires a plurality of iterations, and a quantity of iterations is set to 10. It can be learned that a BER obtained in this embodiment of the present invention has better performance.

It can be learned from FIG. 2k that compared with conventional 16384QAM modulation, in this embodiment of the present invention, when a BER is $10^{-6}$, a 0.5-dB performance gain can be obtained. In addition to a direct Eb/N0 performance gain, a 4-layer structure used in this embodiment of the present invention corresponds to 256QAM modulation, and a lower power rollback of a power amplifier (Power Amplifier, PA for short) can be accepted, so that an extra 3-dB to 5-dB system gain can be obtained. Therefore, a total gain is 3.5 dB to 5.5 dB.

It can be learned based on the foregoing elaboration that in this embodiment of the present invention, an FTN compression ratio is not limited, and a signal bandwidth can be sufficiently compressed to improve spectrum efficiency. In addition, by using a layering transmission architecture, a problem that FTN is hardly used for high-order modulation is resolved, facilitating application of the FTN on the basis that high-order modulation spectrum efficiency is achieved. Therefore, inter-layer interference is effectively canceled, and a BER performance requirement is effectively ensured. For demodulation of each layer, a signal of a layer having a higher power is reconstructed and fed back, and interference is thoroughly canceled. A significant ISI tap of a layer having a lower power is considered in a state transition relationship, thereby reducing impact of interference on FTN demodulation. Compared with high-order QAM modulation with same spectrum efficiency, a requirement on a PA power rollback is reduced, and a system gain is further increased.

Optionally, this embodiment of the present invention is mainly described for an AWGN channel. This embodiment of the present invention may be further applied to a multipath channel environment provided that channel equalization is performed before multi-layer FTN demodulation to remove impact of a channel multi-path. In addition, optionally, this embodiment of the present invention is described by using white noise as an example. When a matching filter is strictly matched with a shaping filter of a sending apparatus, that is, when Ungerboeck matched filtering is performed, a noise is related. If a BCJR algorithm is improved and implemented in a colored noise environment, this embodiment of the present invention may continue to be applied to FTN demodulation in this case. Further, in addition to multi-layer FTN demodulation, the interference-considered FTN demodulation method in this embodiment of the present invention may be applied to signal demodulation in an interference and ISI environment, or decoding of a convolutional code with interference.

It can be learned from the foregoing content that in this embodiment of the present invention, by using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

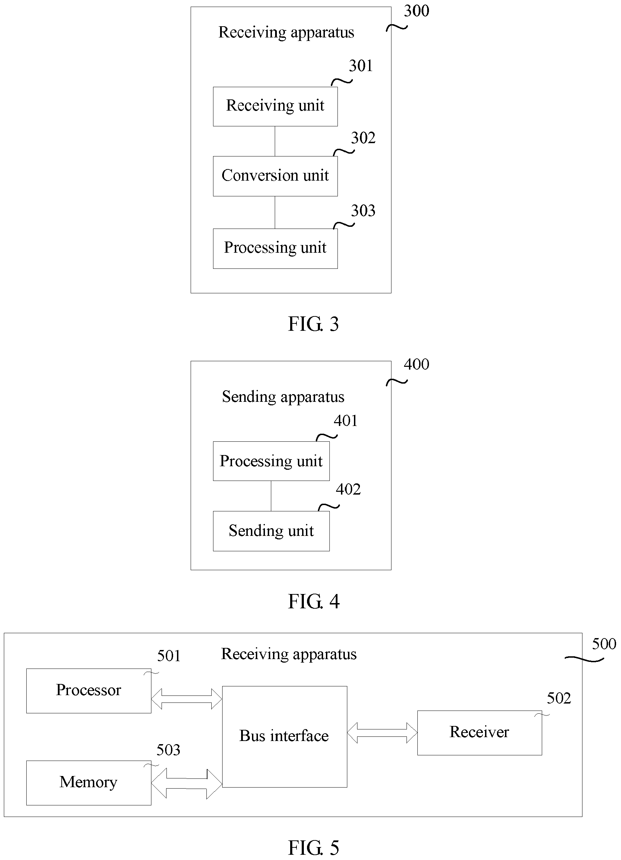

FIG. 3 is a schematic structural diagram of an example of a receiving apparatus according to an embodiment of the present invention.

Based on a same idea, this embodiment of the present invention provides a receiving apparatus, configured to perform the process of the foregoing method. As shown in FIG. 3, the receiving apparatus 300 includes a receiving unit 301, a conversion unit 302, and a processing unit 303.

The receiving unit is configured to receive a signal that is concurrently sent by a sending apparatus by using K layers.

The conversion unit is configured to convert the signal into to-be-processed symbols, where K is a positive integer greater than 1, and powers corresponding to a first layer to a $K^{th}$ layer increase successively.

The processing unit is configured to: for an $i^{th}$ layer in the K layers, where i is greater than or equal to 1 and less than or equal to K, perform the following steps:

separating an $i^{th}$-layer to-be-processed symbol from the to-be-processed symbols; and when it is determined that i is equal to K, using the to-be-processed symbols as the $i^{th}$-layer to-be-processed symbols; or when it is determined that i is not equal to K, obtaining an $(i+1)^{th}$-layer FTN reconstruction symbol to a $K^{th}$-layer FTN reconstruction symbol that are reconstructed based on an $(i+1)^{th}$-layer decision result to a $K^{th}$-layer decision result, and removing the obtained $(i+1)^{th}$-layer FTN reconstruction symbol to $K^{th}$-layer FTN reconstruction symbol from the to-be-processed symbols, to obtain the $i^{th}$-layer to-be-processed symbol;
performing FTN demodulation on the $i^{th}$-layer to-be-processed symbol, to obtain an $i^{th}$-layer demodulated symbol; and
making decision based on the $i^{th}$-layer demodulated symbol, to obtain an $i^{th}$-layer decision result.

Optionally, the processing unit is configured to: when i is equal to 1, generate a first-layer state transition lattice diagram for the first layer; and generate, for each branch transfer and based on the first-layer state transition lattice diagram, a first-layer symbol expected to be output, where a first-layer log-likelihood ratio LLR is calculated based on the first-layer symbol expected to be output.

Optionally, the processing unit is configured to: when i is not equal to 1, generate an $i^{th}$-layer state transition lattice diagram for a $j^{th}$ layer to an $i^{th}$ layer; and perform FTN demodulation on the $i^{th}$-layer to-be-processed symbol based on the $i^{th}$-layer state transition lattice diagram, to obtain the $i^{th}$-layer demodulated symbol, where each of the $j^{th}$ layer to an $(i-1)^{th}$ layer is a preset layer causing interference greater than an interference threshold to the $i^{th}$ layer, and j is greater than or equal to 1 and less than or equal to i-1.

Optionally, when generating the $i^{th}$-layer state transition lattice diagram for the $j^{th}$ layer to the $i^{th}$ layer, the processing unit is configured to generate a state transition lattice diagram for an $i^{th}$-layer ISI tap and a significant ISI tap of each of the $j^{th}$ layer to the $(i-1)^{th}$ layer, where the significant ISI tap of each of the $j^{th}$ layer to the $(i-1)^{th}$ layer is an ISI tap that is of each of the $j^{th}$ layer to the $(i-1)^{th}$ layer and whose energy is greater than an energy threshold corresponding to the $i^{th}$ layer.

Optionally, when performing FTN demodulation on the $i^{th}$-layer to-be-processed symbol based on the $i^{th}$-layer state transition lattice diagram, to obtain the $i^{th}$-layer demodulated symbol, the processing unit is configured to: generate, for each branch transfer and based on the state transition lattice diagram, an $i^{th}$-layer symbol expected to be output, where the $i^{th}$-layer symbol expected to be output includes a sum of symbols that are obtained by multiplying $j^{th}$-layer to $i^{th}$-layer symbols by power factors corresponding to the layers; and calculate an $i^{th}$-layer log-likelihood ratio LLR based on the $i^{th}$-layer symbol expected to be output.

Optionally, a generation rule used when the processing unit generates, for each branch transfer and based on the state transition lattice diagram, the $i^{th}$-layer symbol expected to be output satisfies the requirement of formula (6) in the method embodiment.

Optionally, when performing FTN demodulation on the $i^{th}$-layer to-be-processed symbol, to obtain the $i^{th}$-layer demodulated symbol, and making decision based on the $i^{th}$-layer demodulated symbol, to obtain the $i^{th}$-layer decision result, the processing unit is configured to: perform FTN demodulation, de-interleaving, and decoding on the $i^{th}$-layer to-be-processed symbol repetitively by using an iterative structure, to obtain an $i^{th}$-layer decoding result after a plurality of iterations; and make decision based on the $i^{th}$-layer decoding result, to obtain the $i^{th}$-layer decision result.

Optionally, when performing FTN demodulation, de-interleaving, and decoding on the $i^{th}$-layer to-be-processed symbol repetitively, to obtain the $i^{th}$-layer decoding result after the plurality of iterations, the processing unit is configured to: for each of the plurality of iterations, perform the following steps:
performing FTN demodulation, de-interleaving, and decoding on the $i^{th}$-layer to-be-processed symbol, to obtain an $i^{th}$-layer decoding result of the current iteration; and using the $i^{th}$-layer decoding result of the current iteration as prior information of FTN demodulation in a next iteration process, to perform FTN demodulation, de-interleaving, and decoding of the next iteration.

It can be learned from the foregoing content that by using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

FIG. 4 is a schematic structural diagram of an example of a sending apparatus according to an embodiment of the present invention.

Based on a same idea, this embodiment of the present invention provides a sending apparatus, configured to perform the process of the foregoing method. As shown in FIG. 4, the sending apparatus 400 includes a processing unit 401 and a sending unit 402.

The processing unit is configured to: separately perform encoding, interleaving, and modulation on a signal of all K layers, to obtain a symbol of each of the K layers, where K is a positive integer greater than 1; and filter all symbols of the K layers through FTN shaping filtering based on a power allocated to each of the K layers.

The sending unit is configured to concurrently send all filtered symbols of the K layers, where powers corresponding to a first layer to a $K^{th}$ layer increase successively.

Optionally, for a condition satisfied by the power allocated to each of the K layers and a method for allocating the power to each of the K layers, refer to the descriptions in the foregoing method embodiment part, and details are not described herein again.

It can be learned from the foregoing content that by using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

FIG. 5 is a schematic structural diagram of an example of a receiving apparatus according to an embodiment of the present invention.

Based on a same idea, this embodiment of the present invention provides a receiving apparatus, configured to perform the process of the foregoing method. The receiving apparatus 500 includes a processor 501, a receiver 502, and a memory 503.

The receiver is configured to receive a signal that is concurrently sent by a sending apparatus by using K layers.

The memory is configured to store a program and an instruction.

The processor is configured to perform the following steps by invoking the program and the instruction that are stored in the memory:

converting the signal into to-be-processed symbols, where K is a positive integer greater than 1, and powers corresponding to a first layer to a $K^{th}$ layer increase successively; and

for an $i^{th}$ layer in the K layers, where i is greater than or equal to 1 and less than or equal to K, performing the following steps:

separating an $i^{th}$-layer to-be-processed symbol from the to-be-processed symbols; and when it is determined that i is equal to K, using the to-be-processed symbols as the $i^{th}$-layer to-be-processed symbols; or when it is determined that i is not equal to K, obtaining an $(i+1)^{th}$-layer FTN reconstruction symbol to a $K^{th}$-layer FTN reconstruction symbol that are reconstructed based on an $(i+1)^{th}$-layer decision result to a $K^{th}$-layer decision result, and removing the obtained $(i+1)^{th}$-layer FTN reconstruction symbol to $K^{th}$-layer FTN reconstruction symbol from the to-be-processed symbols, to obtain the $i^{th}$-layer to-be-processed symbol; performing FTN demodulation on the $i^{th}$-layer to-be-processed symbol, to obtain an $i^{th}$-layer demodulated symbol; and making decision based on the $i^{th}$-layer demodulated symbol, to obtain an $i^{th}$-layer decision result.

Optionally, the processor is configured to: when i is equal to 1, generate a first-layer state transition lattice diagram for the first layer; and generate, for each branch transfer and based on the first-layer state transition lattice diagram, a first-layer symbol expected to be output, where a first-layer log-likelihood ratio LLR is calculated based on the first-layer symbol expected to be output.

The processor is configured to: when i is not equal to 1, generate an $i^{th}$-layer state transition lattice diagram for a $j^{th}$ layer to an $i^{th}$ layer; and perform FTN demodulation on the $i^{th}$-layer to-be-processed symbol based on the $i^{th}$-layer state transition lattice diagram, to obtain the $i^{th}$-layer demodulated symbol, where each of the $j^{th}$ layer to an $(i-1)^{th}$ layer is a preset layer causing interference greater than an interference threshold to the $i^{th}$ layer, and j is greater than or equal to 1 and less than or equal to i-1.

Optionally, when generating the $i^{th}$-layer state transition lattice diagram for the $j^{th}$ layer to the $i^{th}$ layer, the processor is configured to generate a state transition lattice diagram for an $i^{th}$-layer ISI tap and a significant ISI tap of each of the $j^{th}$ layer to the $(i-1)^{th}$ layer, where the significant ISI tap of each of the $j^{th}$ layer to the $(i-1)^{th}$ layer is an ISI tap that is of each of the $j^{th}$ layer to the $(i-1)^{th}$ layer and whose energy is greater than an energy threshold corresponding to the $i^{th}$ layer.

Optionally, when performing FTN demodulation on the $i^{th}$-layer to-be-processed symbol based on the $i^{th}$-layer state transition lattice diagram, to obtain the $i^{th}$-layer demodulated symbol, the processor is configured to: generate, for each branch transfer and based on the state transition lattice diagram, an $i^{th}$-layer symbol expected to be output, where the $i^{th}$-layer symbol expected to be output includes a sum of symbols that are obtained by multiplying $j^{th}$-layer to $i^{th}$-layer symbols by power factors corresponding to the layers; and calculate an $i^{th}$-layer log-likelihood ratio LLR based on the $i^{th}$-layer symbol expected to be output.

Optionally, a generation rule used when the processor generates, for each branch transfer and based on the state transition lattice diagram, the $i^{th}$-layer symbol expected to be output satisfies the requirement of formula (6) in the method embodiment.

Optionally, when performing FTN demodulation on the $i^{th}$-layer to-be-processed symbol, to obtain the $i^{th}$-layer demodulated symbol, and making decision based on the $i^{th}$-layer demodulated symbol, to obtain the $i^{th}$-layer decision result, the processor is configured to: perform FTN demodulation, de-interleaving, and decoding on the $i^{th}$-layer to-be-processed symbol repetitively by using an iterative structure, to obtain an $i^{th}$-layer decoding result after a plurality of iterations; and make decision based on the $i^{th}$-layer decoding result, to obtain the $i^{th}$-layer decision result.

Optionally, when performing FTN demodulation, de-interleaving, and decoding on the $i^{th}$-layer to-be-processed symbol repetitively, to obtain the $i^{th}$-layer decoding result after the plurality of iterations, the processor is configured to: for each of the plurality of iterations, perform the following steps:

performing FTN demodulation, de-interleaving, and decoding on the $i^{th}$-layer to-be-processed symbol, to obtain an $i^{th}$-layer decoding result of the current iteration; and using the $i^{th}$-layer decoding result of the current iteration as prior information of FTN demodulation in a next iteration process, to perform FTN demodulation, de-interleaving, and decoding of the next iteration.

A bus architecture may include any quantities of interconnected buses and bridges. Specifically, various circuits of one or more processors represented by the processor and a memory represented by the memory are linked. The bus architecture may further link various other circuits such as a peripheral device, a regulator, and a power management circuit. These are commonly known in the art, and therefore, are not further described in this specification. A bus interface provides an interface. A transceiver may be a plurality of elements, to be specific, include a transmitter and a receiver, and provide a unit configured to communicate with various other apparatuses on a transmission medium. The processor is responsible for managing the bus architecture and normal processing, and the memory may store data used when the processor performs an operation.

It can be learned from the foregoing content that in this embodiment of the present invention, by using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

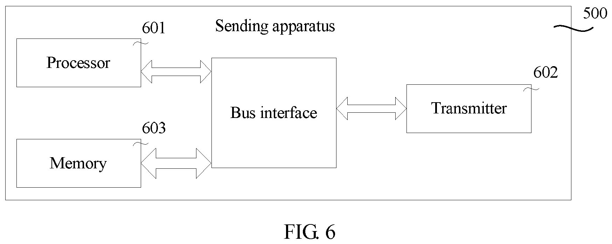

FIG. 6 is a schematic structural diagram of an example of a sending apparatus according to an embodiment of the present invention.

Based on a same idea, this embodiment of the present invention provides a sending apparatus 600, configured to perform the foregoing method process. The sending apparatus 600 includes a processor 601, a transmitter 602, and a memory 603.

The memory is configured to store a program and an instruction.

The processor is configured to perform the following steps by invoking the program and the instruction that are stored in the memory:

separately performing encoding, interleaving, and modulation on a signal of all K layers, to obtain a symbol of each of the K layers, where K is a positive integer greater than 1; and filter all symbols of the K layers through FTN shaping filtering based on a power allocated to each of the K layers.

The transmitter is configured to concurrently send all filtered symbols of the K layers, where powers corresponding to a first layer to a K$^{th}$ layer increase successively.

Optionally, for a condition satisfied by the power allocated to each of the K layers and a method for allocating the power to each of the K layers, refer to the descriptions in the foregoing method embodiment part, and details are not described herein again.

A bus architecture may include any quantities of interconnected buses and bridges. Specifically, various circuits of one or more processors represented by the processor and a memory represented by the memory are linked. The bus architecture may further link various other circuits such as a peripheral device, a regulator, and a power management circuit. These are commonly known in the art, and therefore, are not further described in this specification. A bus interface provides an interface. A transceiver may be a plurality of elements, to be specific, include a transmitter and a receiver, and provide a unit configured to communicate with various other apparatuses on a transmission medium. The processor is responsible for managing the bus architecture and normal processing, and the memory may store data used when the processor performs an operation.

It can be learned from the foregoing content that in this embodiment of the present invention, by using a layering technology, spectrum efficiency achieved when high-order modulation is used is achieved through multi-layer low-order modulation and concurrent transmission. Therefore, communication based on the layering technology provides relatively high spectrum efficiency. In addition, because low-order modulation is used for each layer, FTN demodulation can be performed, with relatively low complexity, for each layer, thereby providing feasibility for further improving the spectrum efficiency. In other words, the spectrum efficiency achieved when high-order modulation is used is achieved through multi-layer low-order modulation and concurrent transmission, and demodulation can be successfully performed by using an FTN technology, thereby further improving the spectrum efficiency.

Persons skilled in the art should understand that the embodiments of the present invention may be provided as a method or a computer program product. Therefore, the present invention may use a form of hardware only embodiments, software only embodiments, or embodiments with a combination of software and hardware. In addition, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams, and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the embodiments and all changes and modifications falling within the scope of the present invention.

Obviously, persons skilled in the art can make various modifications and variations to the present invention without departing from the scope of the present invention. The present invention is intended to cover these modifications and variations provided that they fall within the protection scope defined by the appended claims.

**Claims**

**1.** A Faster than Nyquist, FTN,-based communication method, comprising:

receiving (2201), by a receiving apparatus, a signal that is concurrently sent by a sending apparatus by using K layers, and converting the signal into to-be-processed symbols, wherein K is a positive integer greater than 1, and powers corresponding to a first layer to a $K^{th}$ layer increase successively; and

for an $i^{th}$ layer in the K layers, wherein i is greater than or equal to 1 and less than or equal to K, performing the following steps:

separating (2202), by the receiving apparatus, an $i^{th}$-layer to-be-processed symbol from the to-be-processed symbols; and when determining that i is equal to K, using, by the receiving apparatus, the to-be-processed symbols as the $i^{th}$-layer to-be-processed symbols; or when determining that i is not equal to K, obtaining, by the receiving apparatus, an $(i+1)^{th}$-layer FTN reconstruction symbol to a $K^{th}$-layer FTN reconstruction symbol that are reconstructed based on an $(i+1)^{th}$-layer decision result to a $K^{th}$-layer decision result, and removing, by the receiving apparatus, the obtained $(i+1)^{th}$-layer FTN reconstruction symbol to $K^{th}$-layer FTN reconstruction symbol from the to-be-processed symbols, to obtain the $i^{th}$-layer to-be-processed symbol;

performing (2203), by the receiving apparatus, FTN demodulation on the $i^{th}$-layer to-be-processed symbol, to obtain an $i^{th}$-layer demodulated symbol; and

making (2204), by the receiving apparatus, decision based on the $i^{th}$-layer demodulated symbol, to obtain an $i^{th}$-layer decision result, wherein when i is not equal to 1, the performing, by the receiving apparatus, FTN demodulation on the $i^{th}$-layer to-be-processed symbol, to obtain an $i^{th}$-layer demodulated symbol comprises:

generating, by the receiving apparatus, an $i^{th}$-layer state transition lattice diagram for a $j^{th}$ layer to an $i^{th}$ layer; and

performing, by the receiving apparatus, FTN demodulation on the $i^{th}$-layer to-be-processed symbol based on the $i^{th}$-layer state transition lattice diagram, to obtain the $i^{th}$-layer demodulated symbol, wherein

each of the $j^{th}$ layer to an $(i-1)^{th}$ layer is a preset layer causing interference greater than an interference threshold to the $i^{th}$ layer, and j is greater than or equal to 1 and less than or equal to i-1.

2. The method according to claim 1, wherein the generating, by the receiving apparatus, an $i^{th}$-layer state transition lattice diagram for a $j^{th}$ layer to an $i^{th}$ layer comprises:

generating, by the receiving apparatus, a state transition lattice diagram for an $i^{th}$-layer ISI tap and a significant ISI tap of each of the $j^{th}$ layer to the $(i-1)^{th}$ layer, wherein

the significant ISI tap of each of the $j^{th}$ layer to the $(i-1)^{th}$ layer is an ISI tap that is of each of the $j^{th}$ layer to the $(i-1)^{th}$ layer and whose energy is greater than an energy threshold corresponding to the $i^{th}$ layer.

3. The method according to claim 2, wherein the performing, by the receiving apparatus, FTN demodulation on the $i^{th}$-layer to-be-processed symbol based on the $i^{th}$-layer state transition lattice diagram, to obtain the $i^{th}$-layer demodulated symbol comprises:

generating, by the receiving apparatus for each branch transfer and based on the state transition lattice diagram, an $i^{th}$-layer symbol expected to be output, wherein the $i^{th}$-layer symbol expected to be output comprises a sum of symbols that are obtained by multiplying $j^{th}$-layer to $i^{th}$-layer symbols by power factors corresponding to the layers; and

calculating, by the receiving apparatus, an $i^{th}$-layer log-likelihood ratio LLR based on the $i^{th}$-layer symbol expected to be output.

4. A Faster than Nyquist, FTN,-based receiving apparatus (102, 300), comprising:

a receiving unit (301), configured to receive a signal that is concurrently sent by a sending apparatus by using K layers;

a conversion unit (302), configured to convert the signal into to-be-processed symbols, wherein K is a positive integer greater than 1, and powers corresponding to a first layer to a $K^{th}$ layer increase successively; and

a processing unit (303), configured to: for an $i^{th}$ layer in the K layers, wherein i is greater than or equal to 1 and less than or equal to K, perform the following steps:

separating an $i^{th}$-layer to-be-processed symbol from the to-be-processed symbols; and when it is determined that i is equal to K, using the to-be-processed symbols as the $i^{th}$-layer to-be-processed symbols; or when it is determined that i is not equal to K, obtaining an $(i+1)^{th}$-layer FTN reconstruction symbol to a $K^{th}$-layer FTN reconstruction symbol that are reconstructed based on an $(i+1)^{th}$-layer decision result to a $K^{th}$-layer decision result, and removing the obtained $(i+1)^{th}$-layer FTN reconstruction symbol to $K^{th}$-layer FTN reconstruction symbol from the to-be-processed symbols, to obtain the $i^{th}$-layer to-be-processed symbol;

performing FTN demodulation on the $i^{th}$-layer to-be-processed symbol, to obtain an $i^{th}$-layer demodulated symbol; and

making decision based on the $i^{th}$-layer demodulated symbol, to obtain an $i^{th}$-layer decision result, wherein the processing unit is configured to:

when i is not equal to 1, generate an $i^{th}$-layer state transition lattice diagram for a $j^{th}$ layer to an $i^{th}$ layer; and perform FTN demodulation on the $i^{th}$-layer to-be-processed symbol based on the $i^{th}$-layer state transition lattice diagram, to obtain the $i^{th}$-layer demodulated symbol, wherein

each of the $j^{th}$ layer to an $(i-1)^{th}$ layer is a preset layer causing interference greater than an interference threshold to the $i^{th}$ layer, and j is greater than or equal to 1 and less than or equal to i-1.

5. The receiving apparatus according to claim 4, wherein when generating the $i^{th}$-layer state transition lattice diagram for the $j^{th}$ layer to the $i^{th}$ layer, the processing unit is configured to:

generate a state transition lattice diagram for an $i^{th}$-layer ISI tap and a significant ISI tap of each of the $j^{th}$ layer to the $(i-1)^{th}$ layer, wherein

the significant ISI tap of each of the $j^{th}$ layer to the $(i-1)^{th}$ layer is an ISI tap that is of each of the $j^{th}$ layer to the $(i-1)^{th}$ layer and whose energy is greater than an energy threshold corresponding to the $i^{th}$ layer.

**Patentansprüche**

1. Faster-than-Nyquist(FTN)-basiertes Kommunikationsverfahren, das Folgendes umfasst:

Empfangen (2201) eines Signals, das von einer Sendevorrichtung unter Verwendung von K Schichten gleichzeitig gesendet wird, durch eine Empfangsvorrichtung und Umwandeln des Signals in zu verarbeitende Symbole, wobei K eine positive Ganzzahl größer als 1 ist und eine Leistung, die einer ersten Schicht bis zu einer K-ten Schicht entspricht, zunehmend erhöht wird; und

Durchführen der folgenden Schritte für eine i-te Schicht der K Schichten, wobei i größer als oder gleich 1 und kleiner als oder gleich K ist:

Trennen (2202) eines zu verarbeitenden Symbols der i-ten Schicht von den zu verarbeitenden Symbolen durch die Empfangsvorrichtung und wenn bestimmt wird, dass i gleich K ist, Verwenden der zu verarbeitenden Symbole als die zu verarbeitenden Symbole der i-ten Schicht durch die Empfangsvorrichtung; oder wenn bestimmt wird, dass i nicht gleich K ist, Erhalten eines FTN-Rekonstruktionssymbols der (i+1)-ten Schicht bis zu einem FTN-Rekonstruktionssymbol der K-ten Schicht, die auf Basis eines Entscheidungsergebnisses der (i+1)-ten Schicht bis zu einem Entscheidungsergebnis der K-ten Schicht rekonstruiert werden, durch die Empfangsvorrichtung und Entfernen des erhaltenen FTN-Rekonstruktionssymbols der (i+1)-ten Schicht bis zum FTN-Rekonstruktionssymbol der K-ten Schicht von den zu verarbeitenden Symbolen durch die Empfangsvorrichtung, um das zu verarbeitende Symbol der i-ten Schicht zu erhalten;

Durchführen (2203) einer FTN-Demodulation am zu verarbeitenden Symbol der i-ten Schicht durch die Empfangsvorrichtung, um ein demoduliertes Symbol der i-ten Schicht zu erhalten; und

Treffen (2204) einer Entscheidung durch die Empfangsvorrichtung auf Basis des demodulierten Symbols der i-ten Schicht, um ein Entscheidungsergebnis der i-ten Schicht zu erhalten, wobei, wenn i nicht gleich 1 ist, das Durchführen einer FTN-Demodulation am zu verarbeitenden Symbol der i-ten Schicht durch die Empfangsvorrichtung, um ein demoduliertes Symbol der i-ten Schicht zu erhalten, Folgendes umfasst:

Erzeugen eines i-te-Schicht-Zustandsübergangsgitterdiagramms für eine j-te Schicht bis zu einer i-ten Schicht durch die Empfangsvorrichtung und

Durchführen einer FTN-Demodulation am zu verarbeitenden Symbol der i-ten Schicht durch die Empfangsvorrichtung auf Basis des i-te-Schicht-Zustandsübergangsgitterdiagramms, um das demodulierte Symbol der i-ten Schicht zu erhalten, wobei

jede der j-ten Schicht bis zu einer (i-1)-ten Schicht eine voreingestellte Schicht ist, die bei der i-ten Schicht eine Interferenz bewirkt, die größer ist als ein Interferenzschwellwert, und j größer als oder gleich 1 und kleiner als oder gleich i-1 ist.

2. Verfahren nach Anspruch 1, wobei das Erzeugen eines i-te-Schicht-Zustandsübergangsgitterdiagramms für eine j-te Schicht bis zu einer i-ten Schicht durch die Empfangsvorrichtung Folgendes umfasst:

Erzeugen eines Zustandsübergangsgitterdiagramms für einen ISI-Abzweig der i-ten Schicht und einen signifikanten ISI-Abzweig von jeder der j-ten Schicht bis zur (i-1)-ten Schicht durch die Empfangsvorrichtung, wobei der signifikante ISI-Abzweig von jeder der j-ten Schicht bis zur (i-1)-ten Schicht ein ISI-Abzweig ist, der zu jeder der j-ten Schicht bis zur (i-1)-ten Schicht gehört und dessen Energie größer ist als ein Energieschwellwert, der der i-ten Schicht entspricht.

3. Verfahren nach Anspruch 2, wobei das Durchführen einer FTN-Demodulation am zu verarbeitenden Symbol der i-ten Schicht durch die Empfangsvorrichtung auf Basis des i-te-Schicht-Zustandsübergangsgitterdiagramms, um das demodulierte Symbol der i-ten Schicht zu erhalten, Folgendes umfasst:

Erzeugen eines Symbols der i-ten Schicht, von dem erwartet wird, dass es ausgegeben wird, durch die Empfangsvorrichtung für jede Zweigübertragung und auf Basis des Zustandsübergangsgitterdiagramms, wobei das Symbol der i-ten Schicht, von dem erwartet wird, dass es ausgegeben wird, eine Summe von Symbolen umfasst, die durch Multiplizieren der Symbole der j-ten Schicht bis zur i-ten Schicht mit Leistungsfaktoren, die den Schichten entsprechen, erhalten wird; und
Berechnen eines logarithmischen Wahrscheinlichkeitsverhältnisses LLR für die i-te Schicht auf Basis des Symbols der i-ten Schicht, von dem erwartet wird, dass es ausgegeben wird, durch die Empfangsvorrichtung.

4. Faster-than-Nyquist(FTN)-basierte Empfangsvorrichtung (102, 300), die Folgendes umfasst:

eine Empfangseinheit (301), die dazu ausgelegt ist, ein Signal zu empfangen, das von einer Sendevorrichtung unter Verwendung von K Schichten gleichzeitig gesendet wird;
eine Umwandlungseinheit (302), die dazu ausgelegt ist, das Signal in zu verarbeitende Symbole umzuwandeln, wobei K eine positive Ganzzahl größer als 1 ist und eine Leistung, die einer ersten Schicht bis zu einer K-ten Schicht entspricht, zunehmend erhöht wird; und
eine Verarbeitungseinheit (303), die zu Folgendem ausgelegt ist: Durchführen der folgenden Schritte für eine i-te Schicht der K Schichten, wobei i größer als oder gleich 1 und kleiner als oder gleich K ist:

Trennen eines zu verarbeitenden Symbols der i-ten Schicht von den zu verarbeitenden Symbolen und wenn bestimmt wird, dass i gleich K ist, Verwenden der zu verarbeitenden Symbole als die zu verarbeitenden Symbole der i-ten Schicht; oder wenn bestimmt wird, dass i nicht gleich K ist, Erhalten eines FTN-Rekonstruktionssymbols der (i+1)-ten Schicht bis zu einem FTN-Rekonstruktionssymbol der K-ten Schicht, die auf Basis eines Entscheidungsergebnisses der (i+1)-ten Schicht bis zu einem Entscheidungsergebnis der K-ten Schicht rekonstruiert werden, und Entfernen des erhaltenen FTN-Rekonstruktionssymbols der (i+1)-ten Schicht bis zum FTN-Rekonstruktionssymbol der K-ten Schicht von den zu verarbeitenden Symbolen, um das zu verarbeitende Symbol der i-ten Schicht zu erhalten;
Durchführen einer FTN-Demodulation am zu verarbeitenden Symbol der i-ten Schicht, um ein demoduliertes Symbol der i-ten Schicht zu erhalten; und
Treffen einer Entscheidung auf Basis des demodulierten Symbols der i-ten Schicht, um ein Entscheidungsergebnis der i-ten Schicht zu erhalten, wobei die Verarbeitungseinheit zu Folgendem ausgelegt ist:

wenn i nicht gleich 1 ist, Erzeugen eines i-te-Schicht-Zustandsübergangsgitterdiagramms für eine j-te Schicht bis zu einer i-ten Schicht und
Durchführen einer FTN-Demodulation am zu verarbeitenden Symbol der i-ten Schicht auf Basis des i-te-Schicht-Zustandsübergangsgitterdiagramms, um das demodulierte Symbol der i-ten Schicht zu erhalten, wobei

jede der j-ten Schicht bis zu einer (i-1)-ten Schicht eine voreingestellte Schicht ist, die bei der i-ten Schicht eine Interferenz bewirkt, die größer ist als ein Interferenzschwellwert, und j größer als oder gleich 1 und kleiner als oder gleich i-1 ist.

**5.** Empfangsvorrichtung nach Anspruch 4, wobei die Verarbeitungseinheit beim Erzeugen des i-te-Schicht-Zustandsübergangsgitterdiagramms für die j-te Schicht bis zur i-ten Schicht zu Folgendem ausgelegt ist:

Erzeugen eines Zustandsübergangsgitterdiagramms für einen ISI-Abzweig der i-ten Schicht und einen signifikanten ISI-Abzweig von jeder der j-ten Schicht bis zur (i-1)-ten Schicht, wobei
der signifikante ISI-Abzweig von jeder der j-ten Schicht bis zur (i-1)-ten Schicht ein ISI-Abzweig ist, der zu jeder der j-ten Schicht bis zur (i-1)-ten Schicht gehört und dessen Energie größer ist als ein Energieschwellwert, der der i-ten Schicht entspricht.

**Revendications**

**1.** Procédé de communication basé sur un FTN (Faster than Nyquist), comprenant :

la réception (2201), par un appareil récepteur, d'un signal qui est envoyé simultanément par un appareil émetteur en utilisant K couches, et la conversion du signal en symboles à traiter, K étant un entier positif supérieur à 1, et les puissances correspondant à une première couche à une K$^{\text{ème}}$ couche augmentant successivement ; et pour une i$^{\text{ème}}$ couche dans les K couches, i étant supérieur ou égal à 1 et inférieur ou égal à K, la réalisation des étapes suivantes :

la séparation (2202), par l'appareil de réception, d'un symbole à traiter de i$^{\text{ème}}$ couche des symboles à traiter ; et lorsqu'il est déterminé que i est égal à K, l'utilisation, par l'appareil de réception, des symboles à traiter comme symboles à traiter de i$^{\text{ème}}$ couche ; ou lors de la détermination que i n'est pas égal à K, l'obtention, par l'appareil récepteur, d'un symbole de reconstruction FTN de (i+1)$^{\text{ème}}$ couche en un symbole de reconstruction FTN de K$^{\text{ème}}$ couche qui sont reconstruits sur la base d'un résultat de décision de (i+1)$^{\text{ème}}$ couche en un résultat de décision de K$^{\text{ème}}$ couche, et la suppression, par l'appareil récepteur, du symbole de reconstruction FTN de (i+ 1)$^{\text{ème}}$ couche obtenu au symbole de reconstruction FTN de K$^{\text{ème}}$ couche des symboles à traiter, pour obtenir le symbole de i$^{\text{ème}}$ couche à traiter ;
la réalisation (2203), par l'appareil récepteur, d'une démodulation FTN sur le symbole à traiter de i$^{\text{ème}}$ couche, pour obtenir un symbole démodulé de i$^{\text{ème}}$ couche ; et
la prise (2204), par l'appareil récepteur, d'une décision basée sur le symbole démodulé de i$^{\text{ème}}$ couche, pour obtenir un résultat de décision de i$^{\text{ème}}$ couche, lorsque i n'est pas égal à 1, la réalisation, par l'appareil récepteur, d'une démodulation FTN sur le symbole à traiter de i$^{\text{ème}}$ couche, pour obtenir un symbole démodulé de i$^{\text{ème}}$ couche comprenant :

la génération, par l'appareil récepteur, d'un diagramme en réseau de transition d'état de i$^{\text{ème}}$ couche pour une j$^{\text{ème}}$ couche à une i$^{\text{ème}}$ couche ; et
la réalisation, par l'appareil récepteur, d'une démodulation FTN sur le symbole à traiter de i$^{\text{ème}}$ couche sur la base du diagramme en réseau de transition d'état de i$^{\text{ème}}$ couche, pour obtenir le symbole démodulé de i$^{\text{ème}}$ couche,

chacune de la j$^{\text{ème}}$ couche à une (i-1)$^{\text{ème}}$ couche étant une couche prédéfinie causant une interférence supérieure à un seuil d'interférence à la i$^{\text{ème}}$ couche, et j étant supérieur ou égal à 1 et inférieur ou égal à i-1.

**2.** Procédé selon la revendication 1, la génération, par l'appareil récepteur, d'un diagramme en réseau de transition d'état de i$^{\text{ème}}$ couche pour une j$^{\text{ème}}$ couche à une i$^{\text{ème}}$ couche comprenant :

la génération, par l'appareil récepteur, d'un diagramme en réseau de transition d'état pour une prise ISI de i$^{\text{ème}}$ couche et une prise ISI significative de chacune de la j$^{\text{ème}}$ couche à la (i-1)$^{\text{ème}}$ couche,
la prise ISI significative de chacune de la j$^{\text{ème}}$ couche à la (i-1)$^{\text{ème}}$ couche étant une prise ISI qui est de chacune de la j$^{\text{ème}}$ couche à la (i-1)$^{\text{ème}}$ couche et dont l'énergie est supérieure à un seuil d'énergie correspondant à la i$^{\text{ème}}$ couche.

**3.** Procédé selon la revendication 2, l'exécution, par l'appareil récepteur, d'une démodulation FTN sur le symbole à traiter de i$^{\text{ème}}$ couche sur la base du diagramme en réseau de transition d'état de i$^{\text{ème}}$ couche, pour obtenir le symbole démodulé de i$^{\text{ème}}$ couche comprenant :

la génération, par l'appareil récepteur pour chaque transfert de branche et sur la base du diagramme en réseau de transition d'état, d'un symbole de $i^{ème}$ couche devant être émis en sortie, le symbole de $i^{ème}$ couche devant être émis en sortie comprenant une somme de symboles qui sont obtenus en multipliant les symboles de $j^{ème}$ couche à $i^{ème}$ couche par des facteurs de puissance correspondant aux couches ; et

le calcul, par l'appareil récepteur, d'un rapport logarithmique de vraisemblance de $i^{ème}$ couche LLR basé sur le symbole de $i^{ème}$ couche devant être émis en sortie.

4. Appareil récepteur (102, 300) basé sur un FTN, comprenant :

une unité de réception (301), configurée pour recevoir un signal qui est envoyé simultanément par un appareil émetteur en utilisant K couches ;

une unité de conversion (302), configurée pour convertir le signal en symboles à traiter, K étant un entier positif supérieur à 1, et les puissances correspondant à une première couche à une $K^{ème}$ couche augmentant successivement ; et

une unité de traitement (303), configurée pour : pour une $i^{ème}$ couche dans les K couches, i étant supérieur ou égal à 1 et inférieur ou égal à K, réaliser les étapes suivantes :

la séparation d'un symbole à traiter de $i^{ème}$ couche des symboles à traiter ; et lorsqu'il est déterminé que i est égal à K, l'utilisation des symboles à traiter comme symboles à traiter de $i^{ème}$ couche ; ou lorsqu'il est déterminé que i n'est pas égal à K, l'obtention d'un symbole de reconstruction FTN de $(i+1)^{ème}$ couche en un symbole de reconstruction FTN de $K^{ème}$ couche qui sont reconstruits sur la base d'un résultat de décision de $(i+1)^{ème}$ couche en un résultat de décision de $K^{ème}$ couche, et la suppression du symbole de reconstruction FTN de $(i+1)^{ème}$ couche obtenu en un symbole de reconstruction FTN de $K^{ème}$ couche des symboles à traiter, pour obtenir le symbole à traiter de $i^{ème}$ couche ;

la réalisation d'une démodulation FTN sur le symbole à traiter de $i^{ème}$ couche, pour obtenir un symbole démodulé de $i^{ème}$ couche ; et

la prise d'une décision basée sur le symbole démodulé de $i^{ème}$ couche, pour obtenir un résultat de décision de $i^{ème}$ couche, l'unité de traitement étant configurée pour :

lorsque i n'est pas égal à 1, générer un diagramme en réseau de transition d'état de $i^{ème}$ couche pour une $j^{ème}$ couche à une $i^{ème}$ couche ; et

réaliser une démodulation FTN sur le symbole à traiter de $i^{ème}$ couche sur la base du diagramme en réseau de transition d'état de $i^{ème}$ couche, pour obtenir le symbole démodulé de $i^{ème}$ couche,

chacune de la $j^{ème}$ couche à une $(i-1)^{ème}$ couche étant une couche prédéfinie causant une interférence supérieure à un seuil d'interférence à la $i^{ème}$ couche, et j étant supérieur ou égal à 1 et inférieur ou égal à i-1.

5. Appareil de réception selon la revendication 4, lors de la génération du diagramme en réseau de transition d'état de $i^{ème}$ couche pour la $j^{ème}$ couche à la $i^{ème}$ couche, l'unité de traitement étant configurée pour :

générer un diagramme en réseau de transition d'état pour une prise ISI de $i^{ème}$ couche et une prise ISI significative de chacune de la $j^{ème}$ couche à la $(i-1)^{ème}$ couche,

la prise ISI significative de chacune de la $j^{ème}$ couche à la $(i-1)^{ème}$ couche étant une prise ISI qui est de chacune de la $j^{ème}$ couche à la $(i-1)^{ème}$ couche et dont l'énergie est supérieure à un seuil d'énergie correspondant à la $i^{ème}$ couche.

```
┌──────────────┐  101         ┌──────────────┐  102
│  Sending     │              │  Receiving   │
│  apparatus   │──────────────│  apparatus   │
│              │              │              │
└──────────────┘              └──────────────┘
```

FIG. 1a

┌─────────────────────────────────────────────────────────┐
│  A sending apparatus separately performs encoding,      │
│  interleaving, and modulation on a signal of all K      │
│  layers, to obtain a symbol of each of the K layers,    │─── 2101
│  where K is a positive integer greater than 1           │
└─────────────────────────────────────────────────────────┘
                          │
                          ▼
┌─────────────────────────────────────────────────────────┐
│  The sending apparatus filters all symbols of the K     │
│  layers through Faster than Nyquist FTN shaping         │
│  filtering based on a power allocated to each of the K  │─── 2102
│  layers, and concurrently sends the symbols, where      │
│  powers corresponding to a first layer to a $K^{th}$    │
│  layer increase successively                            │
└─────────────────────────────────────────────────────────┘

FIG. 2a

A receiving apparatus receives a signal that is concurrently sent by a sending apparatus by using K layers, and converts the signal into to-be-processed symbols, where K is a positive integer greater than 1, and powers corresponding to a first layer to a $K^{th}$ layer increase successively ⟿ 2201

The receiving apparatus separates an $i^{th}$-layer to-be-processed symbol from the to-be-processed symbols; and when determining that i is equal to K, the receiving apparatus uses the to-be-processed symbols as the $i^{th}$-layer to-be-processed symbols; or when determining that i is not equal to K, the receiving apparatus obtains an $(i+1)^{th}$-layer Faster than Nyquist FTN reconstruction symbol to a $K^{th}$-layer FTN reconstruction symbol that are reconstructed based on an $(i+1)^{th}$-layer decision result to a $K^{th}$-layer decision result, and the receiving apparatus removes the obtained $(i+1)^{th}$-layer FTN reconstruction symbol to $K^{th}$-layer FTN reconstruction symbol from the to-be-processed symbols, to obtain the $i^{th}$-layer to-be-processed symbol ⟿ 2202

The receiving apparatus performs FTN demodulation on the $i^{th}$-layer to-be-processed symbol, to obtain an $i^{th}$-layer demodulated symbol ⟿ 2203

The receiving apparatus makes decision based on the $i^{th}$-layer demodulated symbol, to obtain an $i^{th}$-layer decision result ⟿ 2204

FIG. 2b

2301

Start

A receiving apparatus receives a signal that is concurrently sent by a sending apparatus by using K layers, and converts the signal into to-be-processed symbols $x_n$ through matched filtering and minimum phase system conversion, where K is a positive integer greater than 1, and powers corresponding to a first layer to a $K^{th}$ layer increase successively

2302

Set i to K, and record an $i^{th}$-layer to-be-processed symbol as $x^i_n$

2303

2304

The receiving apparatus performs Faster than Nyquist FTN demodulation, de-interleaving, and decoding iteratively based on the $i^{th}$-layer to-be-processed symbol, and finally makes decision to obtain an $i^{th}$-layer decision result

2307

The receiving apparatus decreases i by 1, and subtracts an $(i+1)^{th}$-layer FTN reconstruction symbol to a $K^{th}$-layer FTN reconstruction symbol from $x_n$, to obtain the $i^{th}$-layer to-be-processed symbol

2305   N

i = 1?

Y

2308

End

The receiving apparatus reconstructs an $i^{th}$-layer FTN reconstruction symbol based on the $i^{th}$-layer decision result

2306

FIG. 2c

In this figure: FTN – Faster than Nyquist
AWGN – Additive Gaussian White Noise
QPSK – Quadrature Phase Shift Keying

FIG. 2d

Set an $i^{th}$-layer power to an $(i-1)^{th}$-layer power — Step A

Increase the $i^{th}$-layer power at a preset step once, to obtain an updated $i^{th}$-layer power — Step B

Step C

Is a sum of the first-layer power to the $(i-1)^{th}$-layer power and the updated $i^{th}$-layer power not greater than a total power threshold? — N → Set a value of K to $i-1$ — Step C

Y

Is a system BER less than a BER threshold? — Step D

N

Y

Determine the updated $i^{th}$-layer power as the $i^{th}$-layer power — Step E

Step F

Is i less than preset $K_0$? — N → Set a value of K to $K_0$ — Step F

Increase i by 1 — Y

FIG. 2e

FIG. 2f

FIG. 2g

FIG. 2h

FIG. 2i

FIG. 2j

FIG. 2k

300

Receiving apparatus

301

Receiving unit

302

Conversion unit

303

Processing unit

FIG. 3

400

Sending apparatus

401

Processing unit

402

Sending unit

FIG. 4

501          Receiving apparatus          500

Processor

502

Bus interface          Receiver

503

Memory

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Iterative receiver for faster-than-Nyquist broadcasting. **KIM Y J D et al.** ELECTRONICS LET. IEE STEVENAGE, 22 November 2012, vol. 48, 1561-1562